# EUROPEAN PATENT SPECIFICATION

(11) **EP 3 179 795 B1**
(45) Date of publication and mention of the grant of the patent: **03.06.2020**
(21) Application number: 14899296.9
(22) Date of filing: 21.11.2014
(51) Int. Cl.: H04W 72/04, H04W 72/12

(54) **DEVICE-TO-DEVICE SERVICE PROCESSING METHOD AND APPARATUS**
VORRICHTUNG-ZU-VORRICHTUNG-DIENSTVERARBEITUNGSVERFAHREN UND -VORRICHTUNG
PROCÉDÉ ET APPAREIL DE TRAITEMENT DE SERVICE DE DISPOSITIF À DISPOSITIF

(30) Priority: 08.08.2014 CN 201410391723
(43) Date of publication of application: 14.06.2017
(73) Proprietor: ZTE Corporation, Shenzhen, Guangdong 518057 (CN)
(72) Inventor: LI, Dapeng, Shenzhen Guangdong 518057 (CN); CHEN, Lin, Shenzhen Guangdong 518057 (CN)
(74) Representative: Aipex B.V.
(86) International application number: PCT/CN2014/091919
(87) International publication number: WO 2016/019655

(56) References cited:
- WO-A1-2014/005536
- CN-A- 103 327 568
- CN-A- 103 686 908
- US-A1- 2013 287 012
- US-A1- 2014 162 671
- US-A1- 2014 162 671
- INSTITUTE FOR INFORMATION INDUSTRY (III): "Integrated resource scheduling for in-coverage D2D communication to support Mode 1 and Mode 2", 3GPP DRAFT; R1-141499 INTEGRATED RESOURCE SCHEDULING FOR IN-COVERAGE D2D COMMUNICATION TO SUPPORT MODE 1 AND MODE2, 3RD GENERATION PARTNERSHIP PROJECT (3GPP), MOBILE COMPETENCE CENTRE ; 650, ROUTE DES , vol. RAN WG1, no. Shenzhen, China; 20140331 - 20140404 30 March 2014 (2014-03-30), XP050787168, Retrieved from the Internet: URL:http://www.3gpp.org/ftp/Meetings_3GPP_ SYNC/RAN1/Docs/ [retrieved on 2014-03-30]
- ERICSSON: "Resource allocation for ProSe Direct Discovery", 3GPP DRAFT; R2-142407 - RESOURCE ALLOCATION FOR PROSE DIRECT DISCOVERY, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; , vol. RAN WG2, no. Seoul; 20140519 - 20140523 18 May 2014 (2014-05-18), XP050793558, Retrieved from the Internet: URL:http://www.3gpp.org/ftp/Meetings_3GPP_ SYNC/RAN2/Docs/ [retrieved on 2014-05-18]
- QUALCOMM INCORPORATED: "Pseudo-CR on use of pre-configured provisioning parameters for ProSe direct communication when UE is served by E-UTRAN", 3GPP DRAFT; C1-142652, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. CT WG1, no. Cape Town, South Africa; 20140714 - 20140718 14 July 2014 (2014-07-14), XP050777698, Retrieved from the Internet: URL:http://www.3gpp.org/ftp/Meetings_3GPP_ SYNC/CT1/Docs/ [retrieved on 2014-07-14]
- ZTE CORPORATION: "Resource pools for D2D communication", 3GPP DRAFT; R2-141483 - RESOURCE POOLS FOR D2D COMMUNICATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Valencia; 20140331 - 20140404 22 March 2014 (2014-03-22), XP050817856, Retrieved from the Internet: URL:http://www.3gpp.org/ftp/tsg_ran/WG2_RL 2/TSGR2_85bis/Docs/ [retrieved on 2014-03-22]
- KYOCERA: "Inter-frequency discovery considerations", 3GPP DRAFT; R2-142240_D2D_INTER-FREQ-DISCOVERY, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Seoul; 20140519 - 20140523 18 May 2014 (2014-05-18), XP050790161, Retrieved from the Internet: URL:http://www.3gpp.org/ftp/Meetings_3GPP_ SYNC/RAN1/RAN2/Docs/ [retrieved on 2014-05-18]
- QUALCOMM INCORPORATED: "Aspects of D2D Discovery", 3GPP DRAFT; R2-132446, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Barcelona, Spain; 20130819 - 20130823 9 August 2013 (2013-08-09), XP050718178, Retrieved from the Internet: URL:http://www.3gpp.org/ftp/tsg_ran/WG2_RL 2/TSGR2_83/Docs/ [retrieved on 2013-08-09]
- DEUTSCHE TELEKOM: "ProSe Discovery further prioritization", 3GPP DRAFT; SP-130686, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. TSG SA, no. Busan, South Korea; 20131209 - 20131211 7 December 2013 (2013-12-07), XP050742965, Retrieved from the Internet: URL:http://www.3gpp.org/ftp/Meetings_3GPP_ SYNC/SA/SA/Docs/ [retrieved on 2013-12-07]

## Description

### Technical Field

The present invention relates to the field of communications, and specifically, relates to a device-to-device (simply referred to as D2D) service processing method and apparatus.

### Background

The traditional base-station-based cellular network has significant limitations in aspects such as high data rate and support for Proximity Services (simply referred to as ProSe). The application of D2D technology can reduce the burden on the cellular network, reduce the battery power consumption of a user equipment, improve data rate, and improve the robustness of a network infrastructure, which significantly satisfies the requirements of the above high data rate services and proximity services.

3GPP document R2-142240 discloses that in order to assist the UE in tuning to the proper frequency for monitoring/transmitting D2D discovery, it should be possible for the non-D2D serving cell to provide the list of neighbouring frequencies that do support D2D.

3GPP document R2-132446 discloses that common D2D Discovery mechanism should be considered for in-network, partial network and out of network scenarios, in particular for direct discovery and EPC level discovery.

3GPP document SP-130686 discloses operator's deployment requirements as driving criterion for a further prioritization of the ProSe discovery service.

A D2D service (or ProSe service) may operate in a licensed or unlicensed frequency band, allowing multiple D2D-capable user equipments, i.e., D2D User Equipment (simply referred to as D2D UE), to perform the D2D service with or without a network infrastructure. The D2D services typically includes: D2D discovery and D2D communication. Herein D2D discovery refers to judging/determining that two or more D2D user equipments are proximate to each other (e.g., within a range where D2D communication is possible) or judging/determining that a first user equipment is proximate to a second user equipment. In general, the D2D user equipment can discover each other by transmitting or receiving discovery signals/information, herein a network can assist the D2D user equipment to perform D2D discovery in the presence of cellular network coverage. The D2D communication technology refers to a technology in which communication of some or all of communication data between D2D user equipments can be directly performed without the network infrastructure.

Terminals in neighboring areas can benefit from the use of D2D communication, such as higher speed, lower delay, and lower power consumption, as well as greatly improving operator's wireless resource efficiency. The Relay mode of D2D facilitates improving wireless coverage for the operators. For applications, using proximity information in D2D communication can develop a more attractive new service. The Public Safety system can also utilize the D2D technology for realizing communication between terminals without wireless coverage.

The D2D discovery technology can also be divided into two different ways, one way is D2D Direct Discovery, and another way is an Evolved Packet Core (simply referred to as EPC) way. That is, geographical location information of each terminal is saved through the core network, and a D2D discovery function is further provided according to the information.

For transmission of D2D communication and transmission of D2D discovery, there may further be divided into two modes according to a resource allocation mode. Herein, for transmission of D2D communication, there are Mode 1 and Mode 2, herein Mode 1 refers to that a base station schedules resources; and Mode 2 refers to that the UE autonomously selects resources. For transmission of D2D discovery, there are type 1 and type 2. Herein the mode of type 1 refers to that allocation is not performed according to the granularity of a certain UE during resource allocation. And the mode of type 2 refers to that allocation is performed according to the granularity of the UE during resource allocation.

Since the D2D services are not uniform in the whole network during network deployment, there are situations where frequencies of some areas support the D2D services while neighboring areas do not support the D2D services, and there is a need to make a selection as to whether to support cells of these frequencies when the UE moves. The terminal may also support a unicast service, a D2D service and a Multimedia Broadcast and Multicast Service (MBMS) service simultaneously. A base station needs to know the support of these services from the neighboring cells when assisting handover of a D2D terminal. For example, when there are situations where the D2D services are supported and are not supported in neighboring cells, a cell for handover is selected for the terminal. However, if the base station cannot know D2D service selection information of the D2D terminal, the cell for handover selected for the terminal may not be suitable for the D2D terminal, resulting in a handover failure. Additionally, when the D2D terminal is in a monitoring state, if the base station does not know that the terminal is monitoring the D2D service, the base station may interfere with the D2D monitoring service when scheduling a unicast resource.

A problem of interference or handover failure arises during resource scheduling because D2D service selection information of the D2D terminal and D2D service selection information of the network are not consistent in the existing technology.

### Summary

The invention is defined by the independent claims. Embodiments are defined in the dependent claims. Aiming at the problem that the D2D service selection information of the D2D terminal and the D2D service selection information of the network are not consistent, the present invention provides a D2D service selection information synchronization scheme so as to solve at least the above-mentioned problem.

The present invention provides a D2D service selection information transmitting method according to claim 1, a D2D service processing method according to claim 6, a D2D service selection information transmitting apparatus according to claim 13, and a D2D service processing apparatus according to claim 15.

Also provided is a device-to-device (D2D) service selection information transmitting method, including a D2D terminal transmitting D2D service selection information, herein the D2D service selection information is used to instruct a network side to perform resource scheduling processing or handover processing on the D2D terminal according to the D2D service selection information.

In an exemplary embodiment, the D2D service selection information includes at least one of the following: an indication that the D2D terminal is monitoring a D2D service; a D2D frequency which is of interest to the D2D terminal; a D2D service priority of the D2D terminal; and other PLMNs that the D2D terminal is authorized to monitor or frequency information corresponding to the other PLMNs.

In an exemplary embodiment , an indication that the D2D terminal is monitoring a D2D service includes at least one of the following: an indication that the D2D terminal is monitoring D2D discovery, an indication that the D2D terminal is monitoring D2D communication, an indication that the D2D terminal is cancelling monitoring of D2D discovery, an indication that the D2D terminal is cancelling monitoring of D2D communication, an indication that the D2D terminal is transmitting D2D discovery, an indication that the D2D terminal is transmitting D2D communication, an indication that the D2D terminal is cancelling transmitting of D2D discovery, and an indication that the D2D terminal is cancelling transmitting of D2D communication.

In an exemplary embodiment, a D2D frequency which is of interest to the D2D terminal includes information of a frequency by which the D2D terminal wishes to transmit or receive a D2D service.

In an exemplary embodiment, a D2D frequency which is of interest to the D2D terminal includes at least one of the following: information of a frequency which is of interest to the D2D terminal for monitoring D2D discovery; information of a frequency which is of interest to the D2D terminal for transmitting D2D discovery; information of a frequency which is of interest to the D2D terminal for monitoring D2D communication; and information of a frequency which is of interest to the D2D terminal for transmitting D2D communication.

In an exemplary embodiment, a D2D frequency which is of interest to the D2D terminal further includes: a D2D gap pattern of the D2D terminal.

In an exemplary embodiment , a D2D service priority of the D2D terminal includes at least one of the following: a priority of a D2D discovery service and a priority of a unicast service; a priority of a D2D communication service and a priority of a unicast service; a priority of a D2D discovery service and a priority of an MBMS service; a priority of a D2D communication service and a priority of an MBMS service; a priority of a D2D discovery service and a priority of a D2D communication service; a priority of a D2D service and a priority of a unicast service; and a priority of a D2D service and a priority of an MBMS service.

In an exemplary embodiment, before the D2D terminal transmits the D2D service selection information to a base station, the method further includes the following step: the D2D terminal judging whether a trigger condition for transmitting a D2D service selection message is satisfied, wherein, if yes, the D2D terminal transmits the D2D service selection information to the base station.

In an exemplary embodiment, the trigger conditions include at least one of the following: the D2D terminal successfully establishing a Radio Resource Control (RRC) connection; the D2D terminal performing handover from a cell that does not support the D2D service to a cell that supports the D2D service; the D2D terminal updating the D2D service priority; the D2D terminal updating the D2D frequency which is of interest; the D2D terminal having a D2D transceiving capability; the D2D terminal performing handover from a current cell to another cell; the indication that the D2D terminal is updating the monitoring and/or the indication that the D2D terminal is cancelling the monitoring or transmitting; the D2D terminal initiating D2D discovery and/or communication service.

In an exemplary embodiment, before the D2D terminal transmits the D2D service selection information to a base station, the method further includes: the D2D terminal determining a D2D frequency which is of interest to the D2D terminal.

In an exemplary embodiment, the D2D terminal determining a D2D frequency which is of interest to the D2D terminal includes: the D2D terminal determining a frequency group by which the D2D terminal receives or transmits D2D discovery or D2D communication, herein the determined frequency group is a frequency group of which a simultaneous use is supported by the D2D terminal.

In an exemplary embodiment, the frequency group includes that a frequency that is supported by the current cell.

In an exemplary embodiment, the frequency group includes a frequency corresponding to a D2D group to which the D2D terminal belongs.

In an exemplary embodiment, the D2D terminal acquires a frequency corresponding to a D2D group to which the D2D terminal belongs by one of the following modes: pre-configuration; configuration by an evolved base station eNB through an RRC message; configuration by a core network through a non-accesses stratum message; and acquirement from an application server through an application layer message.

In an exemplary embodiment, the D2D service selection message is implemented by reusing another RRC message or a dedicated RRC message which is set for the D2D service selection message.

In an exemplary embodiment, the D2D service selection information is carried through a newly added field in the RRC message or through an existing field in the RRC message.

Also provided is a device-to-device (D2D) service processing method, at a network side, the method includes: receiving D2D service selection information of a D2D terminal; performing resource scheduling processing on the D2D terminal or handover processing on the D2D terminal according to the D2D service selection information.

In an exemplary embodiment, receiving D2D service selection information of a D2D terminal includes: receiving the D2D service selection information transmitted by the D2D terminal in a non-handover scenario; or receiving D2D service selection information of the D2D terminal transmitted by the D2D terminal or a source base station in a handover scenario.

In an exemplary embodiment, performing resource scheduling processing on the D2D terminal according to the D2D service selection information includes scheduling resources that are used by various current services of the D2D terminal according to the D2D service selection information, herein the various services include at least one of the following: a unicast service, a D2D service and a Multimedia Broadcast and Multicast Service (MBMS).

In an exemplary embodiment, scheduling resources that are used by various current services of the D2D terminal according to the D2D service selection information includes at least one of the following: when there is a unicast service in the D2D terminal, according to an indication that the D2D terminal is monitoring and/or transmitting a D2D service, the base station, when scheduling a unicast resource, avoids a resource used by the D2D terminal in performing monitoring and/or transmitting of D2D discovery and/or D2D communication; when there is a unicast service in the D2D terminal, according to an indication that the D2D terminal is cancelling monitoring of a D2D service, the base station, when scheduling a unicast resource, allows the use of a resource used by the D2D terminal in performing monitoring of D2D discovery and/or D2D communication; when there is a unicast service in the D2D terminal, if a D2D service selection message does not carry an explicit indication that the D2D terminal is monitoring a D2D service, the base station determines that the D2D terminal has a D2D transceiving capability and may use a D2D service, and the base station, when scheduling a unicast resource, avoids a resource used by the D2D terminal in performing monitoring of D2D discovery and/or D2D communication; when there is a unicast service or a Multimedia Broadcast and Multicast Service (MBMS) in the D2D terminal, if the unicast service, the MBMS and the D2D service cannot be supported simultaneously when the base station allocates resources for the D2D terminal, the base station, according to a D2D service priority, makes a preferential selection to support a high priority service and terminates a low priority service; when the D2D service selection information includes D2D frequency information which is of interest to the D2D terminal, the base station allocates a terminal D2D gap pattern configuration to the D2D terminal and transmits the terminal D2D gap pattern information to the D2D terminal.

In an exemplary embodiment, performing handover processing on the D2D terminal according to the D2D service selection information includes: selecting a target cell for handover according to the D2D service selection information, and transmitting the D2D service selection information to a target base station corresponding to the target cell.

In an exemplary embodiment, selecting a target cell for handover according to the D2D service selection information, and transmitting the D2D service selection information to a base station corresponding to the target cell includes at least one of the following: carrying in a handover request message the D2D service selection information including indication information of the D2D terminal monitoring and/or transmitting a D2D service for transmitting to the target base station; according to a D2D frequency which is of interest to the D2D terminal, selecting a neighboring cell that supports the D2D frequency as the target cell for handover, and carrying in the handover request message the D2D service selection information including the D2D frequency which is of interest to the terminal for transmitting to the target cell base station; according to a D2D service priority, preferentially selecting a neighboring cell that supports a high priority service as the target cell for handover, and carrying in the handover request message priority information of a terminal D2D service for transmitting to a base station corresponding to the target cell; wherein, if it is determined that the target cell does not support the D2D service, the D2D service selection information is not transmitted.

In an exemplary embodiment, performing handover processing on the D2D terminal further includes at least one of the following: storing the D2D service selection information by the target base station corresponding to the target cell; when the target base station cannot simultaneously support the D2D/unicast/MBMS services, rejecting, according to the D2D service priority in the D2D service selection information, some services having low priorities, and carrying the rejected service information in a handover response message.

Also provided is a device-to-device (D2D) service selection information transmitting apparatus, including a transmitting module arranged to transmit D2D service selection information of a D2D terminal to a base station.

In an exemplary embodiment, the apparatus further includes a judging module arranged to judge whether a trigger condition for transmitting a D2D service selection message is satisfied, if yes, trigger a determining module.

Also provided is a device-to-device (D2D) service processing apparatus at the network side, including: a receiving module arranged to receive D2D service selection information of a D2D terminal; a processing module arranged to perform resource scheduling processing on the D2D terminal or handover processing on the D2D terminal according to the D2D service selection information.

In an exemplary embodiment, the receiving module is arranged to receive the D2D service selection information transmitted by the D2D terminal in a non-handover scenario, or receive D2D service selection information of the D2D terminal transmitted by the D2D terminal or a source base station in a handover scenario.

In an exemplary embodiment, the processing module performs resource scheduling processing on the D2D terminal in the following way: scheduling resources that are used by various current services of the D2D terminal according to the D2D service selection information, herein the various services include at least one of the following: a unicast service, a D2D service and a Multimedia Broadcast and Multicast Service (MBMS).

In an exemplary embodiment, the processing module schedules resources that are used by various current services of the D2D terminal according to at least one of the following operations: when there is a unicast service in the D2D terminal, according to an indication that the D2D terminal is monitoring and/or transmitting a D2D service, when scheduling a unicast resource, avoiding a resource used by the D2D terminal in performing monitoring and/or transmitting of D2D discovery and/or D2D communication; when there is a unicast service in the D2D terminal, according to an indication that the D2D terminal is cancelling monitoring of a D2D service, when scheduling a unicast resource, allowing the use of a resource used by the D2D terminal in performing monitoring of D2D discovery and/or D2D communication; when there is a unicast service in the D2D terminal, if a D2D service selection message does not carry an explicit indication that the D2D terminal is monitoring a D2D service, determining that the D2D terminal has a D2D transceiving capability and may use a D2D service, and the base station, when scheduling a unicast resource, avoiding a resource used by the D2D terminal in performing monitoring of D2D discovery and/or D2D communication; when there is a unicast service or a Multimedia Broadcast and Multicast Service (MBMS) in the D2D terminal, if the unicast service, the MBMS and the D2D service cannot be supported simultaneously when the base station allocates resources for the D2D terminal, according to a D2D service priority, making a preferential selection to support a high priority service and terminating a low priority service; when the D2D service selection information includes D2D frequency information which is of interest to the D2D terminal, allocating a terminal D2D gap pattern configuration to the D2D terminal and transmitting the terminal D2D gap pattern information to the D2D terminal.

In an exemplary embodiment, the processing module performs handover processing on the D2D terminal in the following way: selecting a target cell for handover according to the D2D service selection information, and transmitting the D2D service selection information to a target base station corresponding to the target cell.

In an exemplary embodiment, the processing module performs handover processing on the D2D terminal according to at least one of the following operations: carrying in a handover request message the D2D service selection information including indication information of the D2D terminal monitoring and/or transmitting a D2D service for transmitting to the target base station; according to a D2D frequency which is of interest to the D2D terminal, selecting a neighboring cell that supports the D2D frequency, and carrying in the handover request message the D2D service selection information including the D2D frequency which is of interest to the terminal for transmitting to the target base station; according to a D2D service priority, preferentially selecting a target neighboring cell that supports a high priority service, and the base station carrying in the handover request message priority information of a terminal D2D service for transmitting to the target base station; if it is determined that the target base station does not support the D2D service, the D2D service selection information to the target base station is not transmitted.

In an exemplary embodiment, the processing module is further arranged to perform at least one of the following operations during handover: storing the D2D service selection information to the target base station corresponding to the target cell; when the target base station cannot simultaneously support the D2D/unicast/MBMS services, rejecting, according to the D2D service priority in the D2D service selection information, some services having low priorities, and carrying the rejected service information in a handover response message.

According to a further embodiment of the present invention, there is provided a device-to-device (D2D) service selection information synchronization system, which includes a D2D terminal including the above-mentioned D2D service selection information transmitting apparatus and a network side including the above-mentioned D2D service processing apparatus.

According to the present invention, by using the method of synchronizing the D2D service selection information for the D2D terminal and the network, the technical problems such as non-support of non-uniform D2D frequencies, handover selection, D2D monitoring and unicast interference and the like in the existing technology are solved, thereby facilitating implementation of D2D services in the terminal and support of handover, and thus the user experience is enhanced.

### Brief Description of Drawings

The drawings described herein are used to provide a further understanding of the present invention and form a part of the present application. Illustrative embodiments of the present invention and descriptions thereof are used to explain the present invention and do not constitute an improper limitation on the present invention. In the drawings:
Fig. 1 is a flowchart of a D2D service processing method according to an embodiment of the present invention.
Fig. 2 is a structural schematic view of a D2D service processing apparatus according to an embodiment of the present invention.
Fig. 3 is a schematic view of the network architecture of D2D service handover according to an embodiment of the present invention.
Fig. 4 is a flowchart of a D2D service selection information synchronization implementation method according to embodiment 1 of the present invention.
Fig. 5 is a flowchart of a D2D service selection information synchronization implementation method according to embodiment 5 of the present invention.
Fig. 6 is a flowchart of a D2D service selection information synchronization implementation method according to embodiment 6 of the present invention.
Fig. 7 is a flowchart of a D2D service selection information synchronization implementation method according to embodiment 8 of the present invention.
Fig. 8 is a flowchart of a D2D service selection information synchronization implementation method according to embodiment 9 of the present invention.

### Detailed Description

Hereinafter, the present invention will be described in detail with reference to the drawings and embodiments. It should be illustrated that, the embodiments in the present application and features of the embodiments may be combined with each other without conflict.

Aiming at the problem that D2D service selection information of a D2D terminal and a network is not consistent, the embodiment of the present invention provides a D2D service selection information synchronization scheme.

In the embodiment of the present invention, a D2D service selection information transmitting method at a D2D terminal side and a D2D service selection information acquiring method at a network side are provided to achieve D2D service selection information synchronization. The D2D service selection information transmitting method and the D2D service selection information receiving method provided by the embodiment of the present invention are described below, respectively.

The D2D service selection information transmitting method according to the embodiment of the present invention includes a D2D terminal base station transmitting a D2D service selection message of the D2D terminal.

In an exemplary embodiment, D2D service selection information may be carried by the D2D service selection message.

In the embodiment of the present invention, the terminal is in an RRC connected state and supports a D2D service.

In an exemplary embodiment of the present invention, the terminal D2D service selection information may include one or a combination of the following:
an indication that the terminal is monitoring/transmitting a D2D service;
a D2D frequency which is of interest to the terminal;
a D2D service priority of the terminal; and
other PLMNs that the terminal is authorized to monitor or frequency information corresponding to the other PLMNs.

In an exemplary embodiment of the present invention, in the terminal D2D service selection information, an indication that the terminal is monitoring a D2D service may further include:
an indication that the terminal is monitoring D2D discovery;
an indication that the terminal is monitoring D2D communication;
an indication that the terminal is cancelling monitoring of D2D discovery;
an indication that the terminal is cancelling monitoring of D2D communication;
an indication that the terminal is transmitting D2D discovery;
an indication that the terminal is transmitting D2D communication;
an indication that the terminal is cancelling transmitting of D2D discovery; and
an indication that the terminal is cancelling transmitting of D2D communication.

Herein an indication that the terminal is cancelling monitoring/transmitting of D2D discovery/communication refers to that the terminal decides to no longer monitor/transmit the D2D discovery/communication service in the case that monitoring/transmitting of the D2D discovery/communication service is already performed.

Herein in the terminal D2D service selection information, a D2D frequency which is of interest to the terminal refers to information of a frequency by which that the terminal wishes to transmit or receive a D2D service.

In an exemplary embodiment of the present invention, a D2D frequency which is of interest may further include at least one of the following:
information of a frequency which is of interest for monitoring D2D discovery by the D2D terminal;
information of a frequency which is of interest for transmitting D2D discovery by the D2D terminal;
information of a frequency which is of interest for monitoring D2D communication by the D2D terminal; and
information of a frequency which is of interest for transmitting D2D communication by the D2D terminal.

Under optimization, D2D frequency information which is of interest to the terminal further includes a terminal D2D gap pattern configuration.

The terminal D2D gap pattern configuration refers to a configuration that is allocated by the terminal for discontinuously monitoring/transmitting the D2D service. The configuration includes a definition of a Measurement GAP configuration MeasGapConfig and/or a definition of a Discontinuous Reception (DRX) configuration DRX-Config in 3GPP, including parameters such as offset (offset), duration (onDurationtime), discontinuous time (InactivityTimer) and the like. The terminal may allocate the D2D gap pattern configuration depending on the deployment of the frequency which is of interest in the local cell and the neighboring cell. The deployment may be acquired through a system broadcast message and/or an RRC dedicated signaling.

Further, the terminal transmits the D2D frequency information which is of interest before initiating D2D discovery/communication resource requests, because the D2D gap pattern configuration influences a carrier aggregate function (CA), and the terminal therefore makes a selection to transmit indication information of a frequency which is of interest to the terminal before initiating the D2D discovery/communication service.

In the terminal D2D service selection information, the terminal D2D service priority represents a priority between the D2D service/unicast service/MBMS service.

In an exemplary embodiment of the present invention, the terminal D2D service priority may include one or any combination of the following:
priorities of a D2D discovery service and a unicast service;
priorities of a D2D communication service and a unicast service;
priorities of a D2D discovery service and an MBMS service;
priorities of a D2D communication service and an MBMS service;
priorities of a D2D discovery service and a D2D communication service;
priorities of a D2D service and a unicast service; and
priorities of a D2D service and an MBMS service.

In an exemplary embodiment of the present invention, before transmitting a D2D service selection message, the terminal may further perform at least one of the following operations:
judging whether a trigger condition for transmitting a D2D service selection message is satisfied;
and deciding a D2D frequency which is of interest.

In an exemplary embodiment of the present invention, in the terminal operation before message transmission, the terminal judging the trigger condition of the D2D service selection message may include one or a combination of the following:
successfully establishing an RRC connection;
performing handover from a cell that does not support the D2D service to a cell that supports the D2D service;
updating the D2D service priority;
updating the D2D frequency which is of interest;
the D2D terminal having a D2D transceiving capability;
performing handover to another cell;
the indication of updating the monitoring and/or the indication of cancelling the monitoring or transmitting;
UE wishing to initiate D2D discovery and/or communication service.

Herein, handover from a cell that does not support the D2D service to a cell that supports the D2D service refers to that the UE performs handover from a cell that does not support D2D to a cell that supports D2D since a base station to which the cell that does not support D2D belongs would not save the D2D service selection information, and therefore, the terminal may again transmit messages to the network so as to update the D2D service selection information.

Herein, determination as to whether the D2D service cell supports the D2D service may be acquired through the system broadcast message, the system broadcast message may be information for support of the D2D service that is carried by the base station in an existing system broadcast message, and may also be information for support of the D2D service that is carried by the base station using a new message, for example, a system broadcast message 18 (SIB 18).

Herein, the trigger condition that the terminal has a D2D transceiving capability refers to that, in order to prevent resources that are allocated to the unicast service at the network side from interfering with resources of D2D services that may be ongoing, when there is no D2D monitoring service or transmitting service, the terminal may trigger the D2D service selection message, at this time, an explicit indication that the terminal is monitoring the D2D service is not carried.

In the terminal operation before message transmission, determining a D2D frequency which is of interest refers to that the terminal determines a frequency group by which the terminal receives or transmits D2D discovery/communication.

Further, the terminal must be capable of supporting simultaneous use of these frequency groups.

The terminal may use an RRC capability reporting (UE capability) flow to report capability information of simultaneously supporting the frequencies, and the base station may also acquire the capability information of the terminal simultaneously supporting the frequencies.

In an exemplary embodiment of the present invention, the frequency group includes at least one frequency that is supported by the current cell, and the frequency that is supported by the current cell may be obtained from a system broadcast message 1 (SIB1).

In an exemplary embodiment of the present invention, the frequency group may also include a frequency corresponding to a D2D group to which the terminal belongs.

In an exemplary embodiment of the present invention, the terminal obtains a frequency corresponding to a D2D group by one or any combination of the following modes:
pre-configuration;
configuration by an evolved base station eNB through an RRC message;
configuration by a core network through a non-accesses stratum message; and
acquirement from an application server through an application layer message, such as obtaining from ProSe server.

In an exemplary embodiment of the present invention, the D2D service selection message transmitted by the terminal to the base station may reuse an existing RRC message, for example, messages such as MBMSInterestIndication, UEAssistanceInformation and the like, and may also be a newly added RRC message, for example, ProSeInterestIndication. The D2D service selection information may be represented using a new field in the message and may also be represented using an existing field added with a D2D indication.

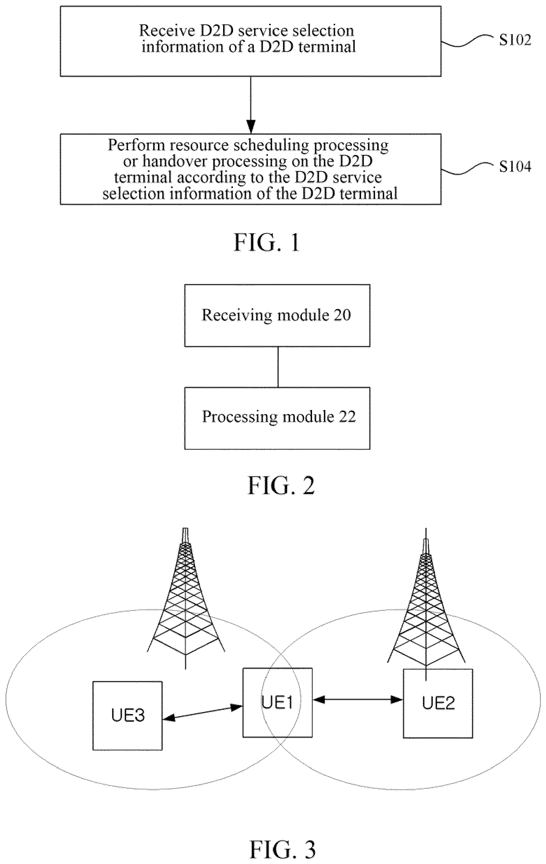

Fig. 1 is a flowchart of a D2D service processing method according to an embodiment of the present invention, as shown in Fig. 1, the following steps are mainly included.

In step S102, a network side receives D2D service selection information of a D2D terminal.

Herein, the D2D service selection information may be carried through a D2D service selection message.

Herein, the D2D service selection information transmitted by the D2D terminal is received in a non-handover scenario. Or the D2D service selection information of the D2D terminal transmitted by the D2D terminal or a source base station is received in a handover scenario.

In step S104, resource scheduling processing or handover processing is performed on the D2D terminal according to the D2D service selection information of the D2D terminal.

In an exemplary embodiment, performing resource scheduling processing on the D2D terminal according to the D2D service selection information may include: scheduling resources that are used by various current services of the D2D terminal according to the D2D service selection information, herein the various services includes at least one of the following: a unicast service, a D2D service and a Multimedia Broadcast and Multicast Service (MBMS).

In an exemplary embodiment, performing handover processing on the D2D terminal according to the D2D service selection information may include: selecting a target cell for handover according to the D2D service selection information, and transmitting the D2D service selection information to a target base station corresponding to the target cell.

In an exemplary embodiment of the present invention, after reception of the D2D service selection information, corresponding operations are performed according to the D2D service selection information. In the embodiment of the present invention, the network side (i.e., base station) operations include an operation of the network side in a non-handover scenario and an operation of the network side in a handover scenario. Descriptions will be made below respectively.

The operation of the network side in a non-handover scenario includes that the base station, after receiving the D2D service selection message transmitted by the terminal, performs one or a combination of the following operations.

In a non-handover scenario, when there is a unicast service in the terminal, according to an indication that the terminal is monitoring and/or transmitting a D2D service, the base station, when scheduling a unicast resource, avoids a resource used by the terminal in performing monitoring and/or transmitting of D2D discovery and/or D2D communication.

In a non-handover scenario, when there is a unicast service in the terminal, according to an indication that the terminal is cancelling monitoring of a D2D service, the base station, when scheduling a unicast resource, may use a resource used by the terminal in performing monitoring of D2D discovery and/or D2D communication.

In a non-handover scenario, when there is a unicast service in the terminal, if the message does not carry an explicit indication that the terminal is monitoring/transmitting a D2D service, the base station determines that the terminal has a D2D transceiving capability and may use a D2D service, and the base station, when scheduling a unicast resource, avoids a resource used by the terminal in performing monitoring/transmission of D2D discovery and/or D2D communication.

In a non-handover scenario, when there is a unicast/MBMS service in the terminal, if the unicast/MBMS/D2D services cannot be supported simultaneously when the base station allocates resources for the terminal, the base station, according to a D2D service priority, makes a preferential selection to support a high priority service, such as a D2D service, and terminates a low priority service, such as the unicast/MBMS service;

In a non-handover scenario, when the terminal D2D service selection message includes D2D frequency information which is of interest to the terminal, the base station allocates a terminal D2D gap pattern configuration to the terminal. The base station transmits the terminal D2D gap pattern information to the terminal through an RRC message.

The terminal D2D gap pattern configuration information refers to a configuration that is allocated by the base station for discontinuously monitoring/transmitting a D2D frequency; the configuration includes a definition of a Measurement GAP configuration MeasGapConfig and/or a definition of a Discontinuous Reception (DRX) configuration DRX-Config in 3GPP, including parameters such as offset (offset), duration (onDurationtime), discontinuous time (InactivityTimer) and the like. The base station may allocate the D2D gap pattern configuration depending on the deployment of the frequency which is of interest to the terminal in the local cell and the neighboring cell. The deployment in the neighboring cell may be acquired through an interface between base stations.

Herein, the RRC message for the base station to configure the terminal D2D gap pattern configuration information may be an RRCReconfiguration message.

The operation of the network side in a handover scenario includes a source base station operation and a target base station operation.

Herein, the operations performed by the source base station after receiving the D2D service selection information transmitted by the D2D terminal includes one or a combination of the following operations.

Operation one: in a handover scenario, the source base station carries the D2D service selection information in a handover request message, including indication information of the terminal monitoring/transmitting a D2D service, the information includes one kind of or a combination of the following information:
an indication that the terminal is monitoring D2D discovery;
an indication that the terminal is monitoring D2D communication;
an indication that the terminal is transmitting D2D discovery;
an indication that the terminal is transmitting D2D communication.

Operation two: in a handover scenario, the source base station selects a neighboring cell that supports the frequency according to the D2D frequency which is of interest to the terminal, the source base station carries the D2D service selection information in the handover request message, including the D2D frequency information which is of interest to the terminal for transmitting to the target base station.

Herein the D2D frequency which is of interest to the terminal refers to information of a frequency by which the terminal wishes to transmit or receive a D2D service.

The D2D frequency which is of interest may be divided as follows:
information of a frequency which is of interest to the terminal for monitoring D2D discovery;
information of a frequency which is of interest to the terminal for transmitting D2D discovery;
information of a frequency which is of interest to the terminal for monitoring D2D communication; and
information of a frequency which is of interest to the terminal for transmitting D2D communication.

Under optimization, the D2D frequency information which is of interest to the terminal further includes the terminal D2D gap pattern configuration.

Operation three: in a handover scenario, the source base station, according to a D2D service priority, preferentially selects a neighboring cell that supports a high priority service, and the source base station carries the terminal D2D service priority information in the handover request message for transmitting to the target base station.

Herein, the terminal D2D service priority includes one or a combination of the following priority:
priorities of a D2D discovery service and a unicast service;
priorities of a D2D communication service and a unicast service;
priorities of a D2D discovery service and an MBMS service;
priorities of a D2D communication service and an MBMS service; and
priorities of a D2D discovery service and a D2D communication service.

Operation four: in a handover scenario, if the target base station does not support the D2D service, the source base station will not transmit the D2D service selection information to the target base station.

The handover request message used in the above-described operations may be HANDOVER REQUEST message of X2 interface, and may also be HANDOVER REQUIRED and HANDOVER REQUEST messages of S1 interface, and in this case the message is forwarded by MME to the target base station. The message may also be a newly added message.

The D2D service selection information in the message may be carried using a newly added field or may be carried using an existing field in the message body.

The operations performed by the source base station after receiving the D2D service selection information transmitted by the D2D terminal includes one or a combination of the following operations.

Operation one: in a handover scenario, the target base station saves the D2D service selection information.

Operation two: in a handover scenario, when the target base station cannot simultaneously support the D2D/unicast/MBMS service due to service congestion, the target base station rejects, according to the D2D service priority in the D2D service selection information, some services, the rejected service information is transmitted to the source base station through a handover response message.

Herein, the handover response message may be HANDOVER REQUEST ACKNOWLEDGE message of X2 interface, and may also be HANDOVER REQUEST ACKNOWLEDGE and HANDOVER COMMAND messages of S1 interface, and in this case the message is forwarded by MME to the target base station. The message may also be a newly added message.

The rejected service information is included in the message, if the rejected service is a unicast service, the information may be carried through the E-RABs Failed to Setup List field in the S1 message or through the E-RABs Not Admitted List field of the X2 interface, and may also be carried through a new field in the message body. If the rejected service is a D2D service, the information may be carried through a newly added field, herein the field is used for the base station to identify which services are rejected, and the information may also be carried through the E-RABs Failed to Setup List field in the S1 message or through the E-RABs Not Admitted List field of the X2 interface. If the rejected service is an MBMS service, the information may be carried using a newly added field or using an S1/X2 field.

Operation three: after completion of handover, when there is a unicast service in the terminal, according to an indication that the terminal is monitoring/transmitting a D2D service in the D2D service selection information, the target base station, when scheduling a unicast resource, avoids a resource used by the terminal in performing monitoring of D2D discovery and/or D2D communication.

The embodiment of the present invention further provides a D2D service selection information transmitting apparatus, a D2D service selection information acquiring apparatus and a D2D service selection information synchronization system which correspond to the above-described method.

The D2D service selection information transmitting apparatus according to the embodiment of the present invention mainly includes a transmitting module arranged to transmit D2D service selection information of a D2D terminal to a base station. Herein the D2D service selection information may be carried through the D2D service selection message.

In an exemplary embodiment of the present invention, the apparatus may further includes a judging module arranged to judge whether a trigger condition for transmitting a D2D service selection message is satisfied, if yes, trigger a determining module 10.

In a specific implementation, the D2D service selection information may include various kinds of information described in the above-described D2D service selection information transmitting method.

The apparatus has technical features that correspond to various alternative embodiments of the above-described D2D service selection information transmitting method, detailed descriptions will not be repeated herein.

Fig. 2 is a structural schematic view of a D2D service selection information acquiring apparatus according to an embodiment of the present invention. As shown in Fig. 2, the following modules are mainly included: a receiving module 20 arranged to receive D2D service selection information of a D2D terminal; and a processing module 22 arranged to perform resource scheduling processing on the D2D terminal or handover processing on the D2D terminal according to the D2D service selection information.

In an exemplary embodiment of the present invention, the receiving module is arranged to receive the D2D service selection information transmitted by the D2D terminal in a non-handover scenario or receive D2D service selection information of the D2D terminal transmitted by the D2D terminal or a source base station in a handover scenario.

In an exemplary embodiment of the present invention, the processing module performs resource scheduling processing on the D2D terminal in the following way: scheduling resources that are used by various current services of the D2D terminal according to the D2D service selection information, herein the various services include at least one of the following: a unicast service, a D2D service and a Multimedia Broadcast and Multicast Service (MBMS).

In an exemplary embodiment of the present invention, the processing module schedules resources that are used by various current services of the D2D terminal according to at least one of the following operations.

When there is a unicast service in the D2D terminal, according to an indication that the D2D terminal is monitoring and/or transmitting a D2D service, when scheduling of a unicast resource, a resource used by the D2D terminal is avoided in performing monitoring and/or transmitting of D2D discovery and/or D2D communication.

When there is a unicast service in the D2D terminal, according to an indication that the D2D terminal is cancelling monitoring of a D2D service, when scheduling of a unicast resource, the use of a resource used by the D2D terminal is allowed in performing monitoring of D2D discovery and/or D2D communication.

When there is a unicast service in the D2D terminal, if a D2D service selection message does not carry an explicit indication that the D2D terminal is monitoring a D2D service, it is determined that the D2D terminal has a D2D transceiving capability and may use a D2D service, and the base station, when scheduling a unicast resource, the base station may avoid a resource used by the D2D terminal in performing monitoring of D2D discovery and/or D2D communication.

When there is a unicast service or a MBMS in the D2D terminal, if the unicast service, the MBMS and the D2D service cannot be supported simultaneously when the base station allocates resources for the D2D terminal, according to a D2D service priority, a preferential selection is made to support a high priority service and a low priority service is terminated.

When the D2D service selection information includes D2D frequency information which is of interest to the D2D terminal, a terminal D2D gap pattern configuration is allocated to the D2D terminal and the terminal D2D gap pattern information is transmitted to the D2D terminal.

In an exemplary embodiment of the present invention, the processing module performs handover processing on the D2D terminal in the following way: selecting a target cell for handover according to the D2D service selection information, and transmitting the D2D service selection information to a target base station corresponding to the target cell.

In an exemplary embodiment of the present invention, the processing module performs handover processing on the D2D terminal according to at least one of the following operations: carrying in a handover request message the D2D service selection information including indication information of the D2D terminal monitoring and/or transmitting a D2D service for transmitting to the target base station; according to a D2D frequency which is of interest to the D2D terminal, selecting a neighboring cell that supports the D2D frequency, and carrying in the handover request message the D2D service selection information including the D2D frequency which is of interest to the terminal for transmitting to the target base station; according to a D2D service priority, preferentially selecting a target neighboring cell that supports a high priority service, and the source base station carrying in the handover request message priority information of a terminal D2D service for transmitting to the target base station; wherein if it is determined that the target base station does not support the D2D service, the D2D service selection information to the target base station is not transmitted.

In an exemplary embodiment of the present invention, the processing module is further arranged to perform at least one of the following operations during handover: storing the D2D service selection information to the target base station corresponding to the target cell; when the target base station cannot simultaneously support the D2D/unicast/MBMS services, rejecting, according to the D2D service priority in the D2D service selection information, some services having low priorities, and carrying the rejected service information in a handover response message.

In the specific implementation, the operations may be performed according to the descriptions in the above-described D2D service processing method embodiment, detailed descriptions will not be repeated herein.

The apparatus has technical features that correspond to various alternative embodiments of the above-described D2D service processing method, detailed descriptions will not be repeated herein.

According to an embodiment of the present invention, there is further provided a D2D service selection information synchronization system, which includes a D2D terminal including the above-described D2D service selection information transmitting apparatus; and a network side including the above-described D2D service processing apparatus.

For a better understanding of the above-described embodiments, detailed descriptions will be made below in conjunction with specific embodiments. The embodiments below may be implemented based on the architecture shown in Fig. 3 but is not limited thereto.

### Embodiment 1

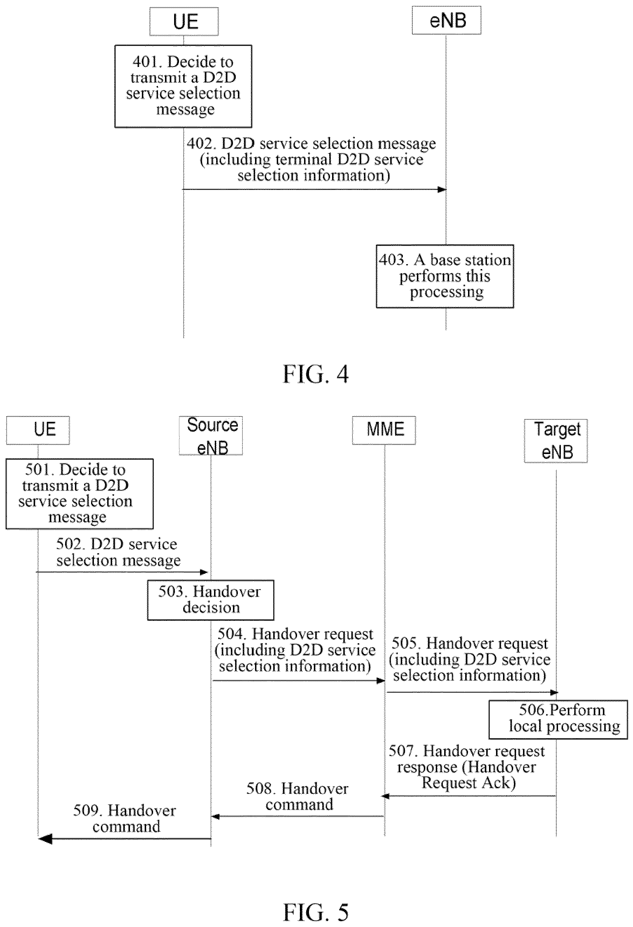

A non-handover scenario is taken as an example in this embodiment, and the D2D terminal service selection information synchronization method will be described in further detail. In this example, a terminal monitors a D2D service. As shown in Fig. 4, the method includes the following steps.

In step 401, a terminal decides to transmit a D2D service selection message.

In performing this step, the terminal is already in an RRC connected state.

The terminal decides to transmit the D2D service selection message to an eNB when the terminal is going to initiate/initiates monitoring of D2D discovery/communication.

In step 402, the terminal transmits the D2D service selection message including D2D service selection information, herein the D2D service selection information includes an indication that the terminal is monitoring/transmitting a D2D service.

The terminal transmits a ProSeInterestIndication message to the eNB, the message includes an indication that the terminal is monitoring/transmitting a D2D service therein, which may identify situations where only monitoring of D2D discovery is supported, only monitoring of D2D communication is supported, monitoring of both D2D discovery and D2D communication is simultaneously supported, and the like.

An existing RRC message such as an MBMSInterestIndication message may also be reused. The message is added with parameters related to D2D identification, for example, a D2D service indication.

In step 403, a base station performs local processing.

After the eNB receives the ProSeInterestIndication message, if there is a unicast service in the UE, the eNB, when scheduling a unicast resource, avoids a resource used by the terminal in performing monitoring of D2D discovery and/or D2D communication.

### Embodiment 2

A non-handover scenario is taken as an example in this embodiment, and the D2D terminal service selection information synchronization method will be described in further detail. In this embodiment, a terminal cancels monitoring of a D2D service. The method includes the following steps.

In step 1, a terminal decides to transmit a D2D service selection message.

The terminal is already in an RRC connected state; the terminal already initiates monitoring of D2D discovery/communication; the terminal already transmits the information of monitoring D2D discovery/communication to an eNB through the D2D service selection message; the terminal decides to transmit the D2D service selection message to the eNB when the terminal is going to cancel/already cancels monitoring of the D2D discovery/communication service.

In step 2, the terminal transmits the D2D service selection message including D2D service selection information.

The terminal transmits a ProSeInterestIndication message to the eNB, the message includes an indication that the terminal is monitoring/transmitting a D2D service therein, which may identify situations where only monitoring of D2D discovery is cancelled, only monitoring of D2D communication is cancelled, monitoring of both D2D discovery and D2D communication is simultaneously cancelled, and the like.

An existing RRC message such as an MBMSInterestIndication message may also be reused. The message is added with parameters related to D2D identification, for example, a D2D service indication.

In step 3, a base station performs local processing.

After the eNB receives the ProSeInterestIndication message, if there is a unicast service in the UE, the eNB, when scheduling a unicast resource, may use a resource used by the terminal in performing monitoring of D2D discovery and/or D2D communication.

### Embodiment 3

A non-handover scenario is taken as an example in this embodiment, and the D2D terminal service selection information synchronization method will be described in further detail. In this example, the message does not carry an explicit indication that the terminal is monitoring/transmitting a D2D service. The method includes the following steps.

In step 1, a terminal decides to transmit a D2D service selection message.

The terminal is already in an RRC connected state and supports a D2D function, and moreover, the function is available; in order to prevent the base station from influencing the D2D service during scheduling of a unicast service, the terminal decides to transmit the D2D service selection message to the eNB.

In step 2, the terminal transmits the D2D service selection message including D2D service selection information.

The terminal transmits a ProSeInterestIndication message to the eNB, the message does not carry an indication that the terminal is monitoring/transmitting a D2D service, and the message is only a transmitted message body and does not have other parameters; or, in addition to an indication of monitoring a D2D service, the message carries other parameters, for example, information such as a D2D frequency which is of interest to the terminal and the like.

An existing RRC message such as an MBMSInterestIndication message may also be reused. The message is added with parameters related to D2D identification, for example, a D2D service indication.

In step 3, a base station performs local processing.

After the eNB receives the ProSeInterestIndication message, if only the message body is received or the message carries other parameters in addition to an indication of monitoring a D2D service, the eNB determines that the UE may perform services such as D2D monitoring/transmission and the like, and the eNB, when scheduling a unicast resource, avoids the use of a resource used by the terminal in performing monitoring of D2D discovery and/or D2D communication.

### Embodiment 4

A non-handover scenario is taken as an example in this embodiment, and the D2D terminal service selection information synchronization method will be described in further detail. In this embodiment, the base station terminates the unicast/MBMS service according to the priority; the method includes the following steps.

In step 1, the terminal decides to transmit a D2D service selection message.

The terminal decides to transmit the D2D service selection message to an eNB after entering an RRC connected state.

In step 2, the terminal transmits to the eNB the D2D service selection message including D2D service selection information.

The terminal transmits a ProSeInterestIndication message to the eNB, the message includes a priority indication of a terminal D2D service, which may identify conditions such as priorities of D2D discovery/communication and the unicast, priorities of D2D discovery/communication and the MBMS and priorities of D2D discovery/communication, etc.

The priority is represented using a bit value in the message, for example, if the value is 1, it is indicated that D2D discovery/communication takes precedence; the priority may also be represented using a field, if a field exists, it is indicated that D2D discovery is in preference to D2D communication.

An existing RRC message such as an MBMSInterestIndication message may also be reused; the message is added with parameters related to D2D identification.

In step 3, a base station performs local processing.

After the eNB receives the ProSeInterestIndication message, if there is a unicast/MBMS service in the UE, the eNB, when scheduling a resource, needs to ensure a service of a high priority, for example, in the case where the priority of the D2D service is higher than that of the unicast/MBMS service, if the unicast/MBMS/D2D services cannot be supported simultaneously when the base station allocates resources for the terminal, the eNB preferentially supports the D2D service and terminates the unicast/MBMS service. For example, in the case where the priority of the MBMS is higher than that of the D2D service and the priority of the D2D service is higher than that of the unicast service, if the unicast/MBMS/D2D services cannot be supported simultaneously when the base station allocates resources for the terminal, the eNB terminates the unicast service and/or the D2D service.

### Embodiment 5

S1 handover is taken as an example in this embodiment, and the D2D service selection information synchronization method will be described in further detail. In this embodiment, application of a D2D frequency which is of interest to the terminal in a handover scenario is described. As shown in Fig. 5, the following steps are included.

In step 501, the terminal decides to transmit a D2D service selection message.

The terminal checks whether there is a D2D frequency which is of interest after a source base station enters an RRC connected state. And if yes, the terminal may further perform the following checks.

If frequency information includes a group of frequencies, before message transmission, there is a need to confirm that the terminal is capable of supporting simultaneous use of the group of these frequencies to receive and/or transmit the D2D service.

Under optimization, before message transmission, the terminal further needs to confirm that the frequencies of the frequency group include at least one frequency that is supported by the current cell; and the frequency that is supported by the current cell may be obtained from a system broadcast message 1 (SIB1).

Under optimization, before message transmission, the terminal further needs to confirm that the frequency group includes a frequency corresponding to a D2D group to which the terminal belongs. The terminal obtains a frequency corresponding to a D2D group by one or a combination of the following modes:
pre-configuration;
configuration by an evolved base station eNB through an RRC message;
configuration by a core network through a non-accesses stratum message; and
acquirement from an application server through an application layer message, such as obtaining from ProSe server.

The terminal decides to transmit to the eNB the D2D service selection message including an indication of D2D frequency information which is of interest.

The terminal, after checking the D2D frequency which is of interest, decides to transmit to the eNB the D2D service selection message including an indication of D2D frequency information which is of interest.

In step 502, the terminal transmits the D2D service selection message including D2D frequency information which is of interest.

The terminal transmits a ProSeInterestIndication message to the source base station (eNB), the message includes an indication of D2D frequency which is of interest to the terminal, which may identify one or a combination of the following:
information of a frequency which is of interest to the D2D terminal for monitoring D2D discovery;
information of a frequency which is of interest to the D2D terminal for transmitting D2D discovery;
information of a frequency which is of interest to the D2D terminal for monitoring D2D communication; and
information of a frequency which is of interest to the D2D terminal for transmitting D2D communication.

The message may also reuse an existing RRC message such as an MBMSInterestIndication message. The message is added with parameters related to D2D identification.

The eNB saves the information, for example, the information may be saved in the context of the eNB for the UE.

In step 503, the source base station makes a handover decision to initiate S1 handover.

The eNB selects a cell including the frequency which is of interest to the terminal from optional handover cells according to the indication of a D2D frequency which is of interest to the terminal. If there is no cell that supports complete including the frequencies in the indication of a frequency which is of interest to the terminal, a cell that partially includes the frequencies in the indication of a frequency which is of interest to the terminal is preferentially selected.

The source base station may obtain information of a frequency that is supported by a neighboring cell through messages between base stations or through pre-configuration.

In step 504, the source base station transmits a handover request to an MME.

The source base station fills a handover request (HANDOVER REQUIRED) message with the D2D service selection information and transmits the same to the MME. The information includes D2D frequency information which is of interest.

In step 505, the MME, after receiving the handover request message, transmits the handover request message (HANDOVER REQUEST) to a target base station through S1 interface, herein the message includes the D2D service selection information of the UE and the D2D service selection information includes the D2D frequency information which is of interest.

In step 506, the target base station, after receiving the handover request message, performs local processing such as admission control and resource allocation and the like according to the D2D service selection information of the UE.

In step 507, the target base station transmits to the MME a handover request acknowledge message (HANDOVER REQUEST ACKNOWLEDGE);

In step 508, the MME transmits to the source base station a handover command (HANDOVER COMMAND);

In step 509, after the source base station receives the handover command message (HANDOVER COMMAND), the source base station transmits the handover command to the terminal through an air interface.

### Embodiment 6

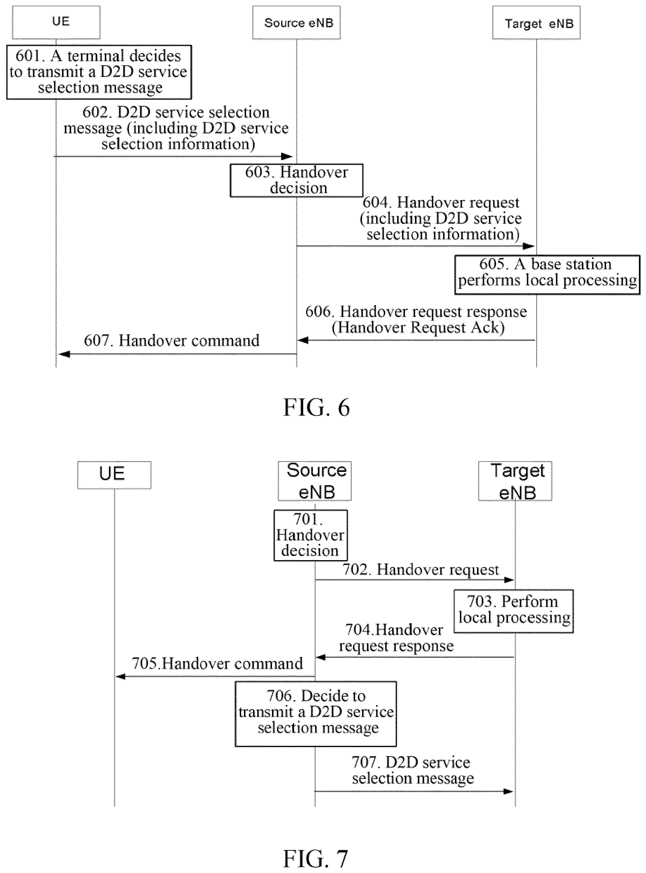

X2 handover is taken as an example in this embodiment, and the D2D service selection information synchronization method will be described in further detail. In this example, application of a D2D service priority in a handover scenario is described. As shown in Fig. 6, the following steps are included.

In step 601, the terminal decides to transmit a D2D service selection message.

The terminal decides to transmit the D2D service selection message to an eNB after a source base station enters an RRC connected state, herein the message includes D2D service priority information.

In step 602, the terminal transmits to the eNB the D2D service selection message including the D2D service priority information.

The terminal transmits a ProSeInterestIndication message to the source base station eNB, the message includes a priority indication of a terminal D2D service, which may identify conditions such as priorities of D2D discovery/communication and the unicast, priorities of D2D discovery/communication and the MBMS and priorities of D2D discovery/communication, etc.

The priority is represented using a bit value in the message, for example, if the value is 1, it is indicated that D2D discovery/communication takes precedence.

The priority may also be represented using a field, if a field exists, it is indicated that D2D discovery is in preference to D2D communication.

An existing RRC message such as an MBMSInterestIndication message may also be reused. The message is added with parameters related to D2D identification.

In step 603, the source base station decides to perform X2 handover according to terminal measurement condition and network configuration. And the source base station, according to a D2D service priority, preferentially selects a neighboring cell that supports a high priority service.

For example, according to the D2D service priority, if the priority of the D2D service is higher than that of the unicast service, and there are a plurality of neighboring cells that may be selected at this time, the source base station should select a neighboring cell that supports the D2D service; and if the priority of the D2D service is lower than that of the unicast service, and there are a plurality of neighboring cells that may be selected at this time, the source base station should select a neighboring cell that supports the D2D service as far as possible.

In step 604, the source base station transmits a handover request message to the target base station. The message includes the D2D service selection information including the D2D service priority.

The D2D service priority may distinguish one or a combination of the following:
priorities of a D2D discovery service and a unicast service;
priorities of a D2D communication service and a unicast service;
priorities of a D2D discovery service and an MBMS service;
priorities of a D2D communication service and an MBMS service; and
priorities of a D2D discovery service and a D2D communication service.

The handover request message used in the above-described operations may be a HANDOVER REQUEST message of X2 interface, and may also be a newly added message.

The D2D service selection information in the message may be carried using a newly added field or may be carried using an existing field in the message body.

The priority is represented using a bit value in the message, for example, if the value is 1, it is indicated that D2D discovery/communication takes precedence;
the priority may also be represented using a field, if a field exists, it is indicated that D2D discovery is in preference to D2D communication.

In step 605, the target base station, after receiving the handover request message, performs local processing such as admission control and resource allocation and the like according to the D2D service selection information of the UE.

When the target base station cannot simultaneously support the D2D/unicast/MBMS services due to service congestion, the target base station rejects some services according to the D2D service priority in the D2D service selection information, the rejected service information is transmitted to the source base station through a handover response message.

For example, if the priority of the D2D service is higher than that of the unicast, and the unicast service cannot be admitted due to congestion of the target base station, it belongs to the situation that the admission is partially successful, and at this time, the target base station should reject the unicast service and admit the D2D service.

If the admission is partially successful, the target base station returns the handover response message including the rejected service information.

If the admission completely fails, the target base station returns a handover failure message.

In the case where the admission is successful and partially successful, the target base station saves the D2D service selection information, for example, the information is saved in the context of the target eNB for the UE, and the target base station allocates resources for the UE with reference to a source base station configuration.

In step 606, the target base station transmits to the source base station a handover request acknowledge message (HANDOVER REQUEST ACKNOWLEDGE).

The rejected service information is included in the message, if the rejected service is a unicast service, the information may be carried through the E-RABs Not Admitted List field and may also be carried through a new field in the message body. If the rejected service is a D2D service, the information may be carried through a newly added field, herein the field is used for the base station to identify which services are rejected, and the information may also be carried through the E-RABs Not Admitted List field. If the rejected service is an MBMS service, the information may be carried using a newly added field or using an X2 field.

In step 607, after the source base station receives the handover request acknowledge message, the source base station transmits the handover command to the terminal through an air interface.

### Embodiment 7

X2 handover is taken as an example in this embodiment, and the D2D service selection information synchronization method will be described in further detail. In this example, the process of an indication of a terminal monitoring/transmitting a D2D service in handover is described. The implementation flow in this embodiment is similar to the flow shown in Fig. 6, which includes the following steps.

In step 1, a terminal decides to transmit a D2D service selection message.

The terminal is already in an RRC connected state in a source base station.

The terminal decides to transmit the D2D service selection message to an eNB when the terminal is going to initiate/initiates monitoring of D2D discovery/communication.

In step 2, the terminal transmits the D2D service selection message including D2D service selection information, herein the information includes an indication that the terminal is monitoring/transmitting a D2D service.

The terminal transmits a ProSeInterestIndication message to the source base station (eNB), the message includes an indication that the terminal is monitoring/transmitting a D2D service therein, which may identify situations where only monitoring of D2D discovery is supported, only monitoring of D2D communication is supported, monitoring of both D2D discovery and D2D communication is simultaneously supported, and the like.

An existing RRC message such as an MBMSInterestIndication message may also be reused. The message is added with parameters related to D2D identification, for example, a D2D service indication.

In step 3, the source base station decides to perform X2 handover according to terminal measurement condition and network configuration.

In step 4, the source base station transmits a handover request message to a target base station.

The request message includes indication information of the terminal monitoring/transmitting a D2D service.

The handover request message used in the above-described operations may be a HANDOVER REQUEST message of X2 interface, and may also be a newly added message.

The indication information of the terminal monitoring/transmitting a D2D service may be carried through a newly added field in the message or through an existing field in the message body.

In step 5, the target base station, after receiving the handover request message, saves the indication information of the terminal monitoring/transmitting a D2D service, for example, the information may be saved in the context of the target base station for the UE.

In step 6, the target base station transmits to the source base station a handover request acknowledge message (HANDOVER REQUEST ACKNOWLEDGE).

In step 7, after the source base station receives the handover request acknowledge message, the source base station transmits a handover command to the terminal through an air interface.

In step 8, the target base station, after completion of handover, avoids a resource used by the terminal in performing monitoring of D2D discovery and/or D2D communication when scheduling a terminal unicast resource.

### Embodiment 8

X2 handover is taken as an example in this embodiment, and the D2D service selection synchronization method will be described in further detail. In this example, handover from a cell that does not support the D2D service to a cell that supports the D2D service of one of the trigger conditions is described. The implementation flow in this embodiment is similar to the flow shown in Fig. 7, which includes the following steps.

In step 701, a source base station does not support a D2D service and decides to perform X2 handover for UE according to terminal measurement condition and network configuration.

In step 702, the source base station transmits a handover request message to a target base station.

Herein, the handover request message does not include D2D service selection information.

In step 703, the target base station receives the handover request message.

In step 704, the target base station transmits to a source base station a handover request acknowledge message (HANDOVER REQUEST ACKNOWLEDGE).

In step 705, after the source base station receives the handover request acknowledge message, the source base station transmits a handover command to the terminal through an air interface.

In step 706, the terminal, after handover to the target base station, decides to transmit the D2D service selection message.

The terminal determines that the source base station does not support a D2D function and simultaneously the target base station supports the D2D function, for example, a determination may be made by the fact that there is no indication of supporting the D2D in a system broadcast message.

The terminal decides to transmit the D2D service selection information to the target base station (eNB) after the target base station is already in an RRC connected state.

In step 707, the terminal transmits to the target base station the D2D service selection message including the D2D service selection information.

### Embodiment 9

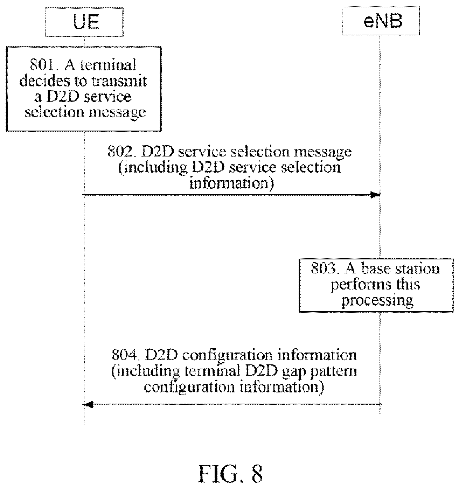

A non-handover scenario is taken as an example in this embodiment, and the D2D terminal service selection information synchronization method will be described in further detail. In this example, a terminal allocates a D2D GAP pattern configuration and transmits the same to a base station. As shown in Fig. 8, the method includes the following steps.

In step 801, a terminal decides to transmit a D2D service selection message.

The terminal is already in an RRC connected state and supports a D2D function, and moreover, the function is available.

The terminal selects a D2D frequency which is of interest for a D2D service, herein the frequency may be a frequency corresponding to a group where the terminal is.

In combination with the D2D frequency which is of interest to the terminal and according to D2D frequency deployment information obtained from system broadcast messages of a local cell and a neighboring cell, the terminal allocates the D2D gap pattern configuration by which the terminal does not need to continuously receive and transmit the frequency, thereby achieving the purpose of power saving.

The terminal decides to transmit to an eNB the D2D service selection message including the D2D gap pattern configuration.

In step 802, the terminal transmits the D2D service selection message including the D2D service selection information.

The terminal transmits to the eNB a ProSeInterestIndication message carrying a D2D frequency which is of interest to the terminal and the D2D gap pattern configuration.

An existing RRC message such as an MBMSInterestIndication message may also be reused. The message is added with parameters related to D2D identification, for example, a D2D service indication.

In step 803, a base station performs local processing.

After receiving the ProSeInterestIndication message, the eNB checks whether the D2D gap pattern configuration allocated by the terminal is appropriate. If not appropriate, the base station allocates a new D2D gap pattern configuration depending on the deployment of the D2D frequency which is of interest and the D2D frequency in the local cell and the neighboring cell.

In step 804, the base station transmits the D2D configuration message including the D2D gap configuration pattern.

The eNB transmits the D2D configuration message to the terminal, herein the message may be an RRC Reconfiguration message or a newly added message. If there is a newly allocated D2D gap pattern configuration, the configuration would be included in the D2D configuration message.

### Embodiment 10

A non-handover scenario is taken as an example in this embodiment, and the D2D terminal service selection information synchronization method will be described in further detail. In this example, the terminal requests the base station to allocate a D2D GAP pattern configuration. The steps in this embodiment are similar to those in Fig. 8, and the following steps are mainly included.

In step 1, a terminal decides to transmit a D2D service selection message.

The terminal is already in an RRC connected state and supports a D2D function, and moreover, the function is available.

The terminal selects a D2D frequency which is of interest for a D2D service, herein the frequency may be a frequency corresponding to a group where the terminal is;

The terminal decides to transmit to the eNB a D2D service selection message including D2D frequency information which is of interest to the terminal.

In step 2, the terminal transmits the D2D service selection message including the D2D service selection information.

The terminal transmits to the eNB a ProSeInterestIndication message carrying a D2D frequency which is of interest to the terminal.

An existing RRC message such as an MBMSInterestIndication message may also be reused. The message is added with parameters related to D2D identification, for example, a D2D service indication.

In step 3, a base station performs local processing.

After receiving the ProSeInterestIndication message, the eNB allocates a D2D gap pattern configuration depending on the deployment of the D2D frequency which is of interest and the D2D frequency in a local cell and a neighboring cell.

In step 4, the base station transmits the D2D configuration message including the D2D gap configuration pattern.

The eNB transmits the D2D configuration message to the terminal, herein the message may be an RRCReconfiguration message or a newly added message. The D2D gap pattern configuration is included in the D2D configuration message.

In conclusion, based on the technical solution provided by the embodiments of the present invention, the terminal may realize synchronization of the D2D service selection information, thereby enhancing the user's experience.

In another embodiment, there is further provided software for executing the technical solutions described in the above-described embodiments and alternative embodiments.

In another embodiment, there is further provided a storage medium having the above-described software stored therein, the storage medium includes but is not limited to the following medium: optical disks, floppy disks, hard disks and erasable memories and the like.

Obviously, those skilled in the art should understand that each of the foregoing modules or steps of the present invention can be realized with general computing devices, they may be concentrated on a single computing device, or distributed in a network constituted by a plurality of computing devices. Alternatively, they may be realized with program codes executable by computing devices, thereby they may be stored in storage devices and executed by computing devices. And in some cases, the illustrated or described steps can be performed in sequences different from the sequences herein, or they may be respectively made into integrated circuit modules, or a plurality of modules or steps among them are made into a single integrated circuit module. In this way, the present invention is not limited to any specific combination of hardware and software.

The foregoing descriptions are merely alternative embodiments of the present invention and are not used to limit the present invention. For one skilled in the art, the present invention may have various modifications and changes. All modifications, identical replacements and improvements made without departing from the rule and principle of the present invention shall be within the protection scope of the present invention.

### Industrial Applicability

Based on the technical solution provided by the embodiments of the present invention, by using the method of synchronizing the D2D service selection information for the D2D terminal and the network, the technical problems such as non-support of non-uniform D2D frequencies, handover selection, D2D monitoring and unicast interference and the like in the existing technology are solved, thereby facilitating implementation of D2D services in the terminal and support of handover, and thus the user experience is enhanced.

## Claims

1. A device-to-device D2D service selection information transmitting method, comprising:
a D2D terminal transmitting (402, 802) D2D service selection information to a base station, wherein the D2D service selection information is used to instruct the base station to perform resource scheduling processing or handover processing on the D2D terminal according to the D2D service selection information;
wherein the D2D service selection information comprises:
a D2D frequency which is of interest to the D2D terminal, wherein the D2D frequency which is of interest to the D2D terminal comprises information of a frequency by which the D2D terminal wishes to transmit or receive a D2D service, the D2D frequency which is of interest to the D2D terminal is used for the base station to select a neighboring cell that supports the D2D frequency which is of interest to the D2D terminal for handover, and is used for a configuration that is allocated by the base station for discontinuously monitoring or transmitting a D2D frequency in a non-handover scenario.

2. The method of claim 1, wherein an indication that the D2D terminal is monitoring a D2D service comprises at least one of followings:
an indication that the D2D terminal is monitoring D2D discovery;
an indication that the D2D terminal is monitoring D2D communication;
an indication that the D2D terminal is cancelling monitoring of D2D discovery;
an indication that the D2D terminal is cancelling monitoring of D2D communication;
an indication that the D2D terminal is transmitting D2D discovery;
an indication that the D2D terminal is transmitting D2D communication;
an indication that the D2D terminal is cancelling transmitting of D2D discovery; and
an indication that the D2D terminal is cancelling transmitting of D2D communication.

3. The method of claim 1, wherein a D2D frequency which is of interest to the D2D terminal comprises at least one of followings:
information of a frequency which is of interest to the D2D terminal for monitoring D2D discovery;
information of a frequency which is of interest to the D2D terminal for transmitting D2D discovery;
information of a frequency which is of interest to the D2D terminal for monitoring D2D communication; and
information of a frequency which is of interest to the D2D terminal for transmitting D2D communication.

4. The method of any one of claims 1-3, wherein before the D2D terminal transmits the D2D service selection information to a base station, the method further comprises: the D2D terminal determining a D2D frequency which is of interest to the D2D terminal.

5. The method of claim 4, wherein the D2D terminal determining a D2D frequency which is of interest to the D2D terminal comprises: the D2D terminal determining a frequency group by which the D2D terminal receives or transmits D2D discovery or D2D communication, wherein the determined frequency group is a frequency group of which a simultaneous use to receive and/or transmit the D2D service is supported by the D2D terminal.

6. A device-to-device D2D service processing method, at a network side, comprising:
receiving (S102) D2D service selection information of a D2D terminal; wherein the D2D service selection information comprises: a D2D frequency which is of interest to the D2D terminal, wherein the D2D frequency which is of interest to the D2D terminal comprises information of a frequency by which the D2D terminal wishes to transmit or receive a D2D service; ;
performing (S104) resource scheduling processing on the D2D terminal or handover processing on the D2D terminal according to the D2D service selection information, which comprises: selecting a neighboring cell that supports the D2D frequency which is of interest to the D2D terminal for handover, and allocating a configuration for discontinuously monitoring or transmitting a D2D frequency in a non-handover scenario according to the D2D frequency which is of interest to the D2D terminal.

7. The method of claim 6, wherein receiving the D2D service selection information of the D2D terminal comprises: receiving the D2D service selection information transmitted by the D2D terminal in a non-handover scenario; or, in a handover scenario, receiving D2D service selection information of the D2D terminal transmitted by the D2D terminal or by a source base station.

8. The method of claim 7, wherein performing resource scheduling processing on the D2D terminal according to the D2D service selection information comprises: scheduling resources that are used by various current services of the D2D terminal according to the D2D service selection information, wherein the various services comprise at least one of followings: a unicast service, a D2D service, and a Multimedia Broadcast and Multicast Service MBMS.

9. The method of claim 8, wherein scheduling the resources that are used by the various current services of the D2D terminal according to the D2D service selection information comprises at least one of the following:
when there is a unicast service in the D2D terminal, according to an indication that the D2D terminal is monitoring and/or transmitting a D2D service, the base station, when scheduling a unicast resource, avoids a resource used by the D2D terminal in performing monitoring and/or transmitting of D2D discovery and/or D2D communication;
when there is a unicast service in the D2D terminal, according to an indication that the D2D terminal is cancelling monitoring of a D2D service, the base station, when scheduling a unicast resource, allows the use of a resource used by the D2D terminal in performing monitoring of D2D discovery and/or D2D communication;
when there is a unicast service in the D2D terminal, if a D2D service selection message does not carry an explicit indication that the D2D terminal is monitoring a D2D service, the base station determines that the D2D terminal has a D2D transceiving capability and may use a D2D service, and the base station, when scheduling a unicast resource, avoids a resource used by the D2D terminal in performing monitoring of D2D discovery and/or D2D communication;
when there is a unicast service or a Multimedia Broadcast and Multicast Service MBMS in the D2D terminal, if the unicast service, the MBMS and the D2D service cannot be supported simultaneously when the base station allocates resources for the D2D terminal, the base station, according to a D2D service priority, makes a preferential selection to support a high priority service and terminates a low priority service;
when the D2D service selection information comprises D2D frequency information which is of interest to the D2D terminal, the base station allocates a terminal D2D gap pattern configuration to the D2D terminal and transmits the terminal D2D gap pattern information to the D2D terminal.

10. The method of claim 7, wherein performing handover processing on the D2D terminal according to the D2D service selection information comprises: selecting a target cell for handover according to the D2D service selection information, and transmitting the D2D service selection information to a target base station corresponding to the target cell.

11. The method of claim 10, wherein selecting a target cell for handover according to the D2D service selection information, and transmitting the D2D service selection information to a base station corresponding to the target cell comprises at least one of followings:
carrying in a handover request message the D2D service selection information comprising indication information of the D2D terminal monitoring and/or transmitting a D2D service for transmitting to the target base station;
according to a D2D frequency which is of interest to the D2D terminal, selecting a neighboring cell that supports the D2D frequency as the target cell for handover, and carrying in the handover request message the D2D service selection information comprising the D2D frequency which is of interest to the terminal for transmitting to the target cell base station;
according to a D2D service priority, preferentially selecting a neighboring cell that supports a high priority service as the target cell for handover, and carrying in the handover request message priority information of a terminal D2D service for transmitting to a base station corresponding to the target cell;
wherein, if it is determined that the target cell does not support the D2D service, the D2D service selection information is not transmitted.

12. The method of any one of claims 7-11, wherein performing handover processing on the D2D terminal further comprises at least one of followings:
storing the D2D service selection information by the target base station corresponding to the target cell;
when the target base station cannot simultaneously support the D2D/unicast/MBMS services, rejecting, according to the D2D service priority in the D2D service selection information, some services having low priorities, and carrying the rejected service information in a handover response message.

13. A device-to-device D2D service selection information transmitting apparatus, comprising:
a transmitting module arranged to transmit D2D service selection information of a D2D terminal to a base station; wherein the D2D service selection information comprises:
a D2D frequency which is of interest to the D2D terminal, wherein the D2D frequency which is of interest to the D2D terminal comprises information of a frequency by which the D2D terminal wishes to transmit or receive a D2D service; the D2D frequency which is of interest to the D2D terminal is used for the base station to select a neighboring cell that supports the D2D frequency which is of interest to the D2D terminal for handover, and is used for a configuration that is allocated by the base station for discontinuously monitoring or transmitting a D2D frequency in a non-handover scenario.

14. The apparatus of claim 13, wherein the apparatus further comprises:
a judging module arranged to judge whether a trigger condition for transmitting a D2D service selection message is satisfied, if yes, trigger a determining module.

15. A device-to-device D2D service processing apparatus, comprising:
a receiving module (20) arranged to receive D2D service selection information of a D2D terminal; wherein the D2D service selection information comprises: a D2D frequency which is of interest to the D2D terminal; wherein the D2D frequency which is of interest to the D2D terminal comprises information of a frequency by which the D2D terminal wishes to transmit or receive a D2D service;
a processing module (22) arranged to perform resource scheduling processing on the D2D terminal or handover processing on the D2D terminal according to the D2D service selection information, which comprises: selecting a neighboring cell that supports the D2D frequency which is of interest to the D2D terminal for handover, and allocating a configuration for discontinuously monitoring or transmitting a D2D frequency in a non-handover scenario according to the D2D frequency which is of interest to the D2D terminal.

16. The apparatus of claim 15, wherein the receiving module is arranged to receive the D2D service selection information transmitted by the D2D terminal in a non-handover scenario, or receive D2D service selection information of the D2D terminal transmitted by the D2D terminal or a source base station in a handover scenario.

17. The apparatus of claim 16, wherein the processing module performs resource scheduling processing on the D2D terminal in the following way: scheduling resources that are used by various current services of the D2D terminal according to the D2D service selection information, wherein the various services comprise at least one of the following: a unicast service, a D2D service and a Multimedia Broadcast and Multicast Service MBMS.

18. The apparatus of claim 17, wherein the processing module schedules resources that are used by various current services of the D2D terminal according to at least one of the following operations:
when there is a unicast service in the D2D terminal, according to an indication that the D2D terminal is monitoring and/or transmitting a D2D service, when scheduling a unicast resource, avoiding a resource used by the D2D terminal in performing monitoring and/or transmitting of D2D discovery and/or D2D communication;
when there is a unicast service in the D2D terminal, according to an indication that the D2D terminal is cancelling monitoring of a D2D service, when scheduling a unicast resource, allowing the use of a resource used by the D2D terminal in performing monitoring of D2D discovery and/or D2D communication;
when there is a unicast service in the D2D terminal, if a D2D service selection message does not carry an explicit indication that the D2D terminal is monitoring a D2D service, determining that the D2D terminal has a D2D transceiving capability and may use a D2D service, and the base station, when scheduling a unicast resource, avoiding a resource used by the D2D terminal in performing monitoring of D2D discovery and/or D2D communication;
when there is a unicast service or a Multimedia Broadcast and Multicast Service MBMS in the D2D terminal, if the unicast service, the MBMS and the D2D service cannot be supported simultaneously when the base station allocates resources for the D2D terminal, according to a D2D service priority, making a preferential selection to support a high priority service and terminating a low priority service;
when the D2D service selection information comprises D2D frequency information which is of interest to the D2D terminal, allocating a terminal D2D gap pattern configuration to the D2D terminal and transmitting the terminal D2D gap pattern information to the D2D terminal.

19. The apparatus of claim 15, wherein the processing module performs handover processing on the D2D terminal in the following way: selecting a target cell for handover according to the D2D service selection information, and transmitting the D2D service selection information to a target base station corresponding to the target cell.

20. The apparatus of claim 19, wherein the processing module performs handover processing on the D2D terminal according to at least one of the following operations:
carrying in a handover request message the D2D service selection information comprising indication information of the D2D terminal monitoring and/or transmitting a D2D service for transmitting to the target base station;
according to a D2D frequency which is of interest to the D2D terminal, selecting a neighboring cell that supports the D2D frequency, and carrying in the handover request message the D2D service selection information comprising the D2D frequency which is of interest to the terminal for transmitting to the target base station;
according to a D2D service priority, preferentially selecting a target neighboring cell that supports a high priority service, and the base station carrying in the handover request message priority information of a terminal D2D service for transmitting to the target base station;
wherein if it is determined that the target base station does not support the D2D service, the D2D service selection information to the target base station is not transmitted.

## Patentansprüche

1. Verfahren zum Senden von Vorrichtung-zu-Vorrichtung-, D2D, Dienstauswahlinformationen, umfassend folgende Schritte:
Senden (402, 802) durch ein D2D-Endgerät von D2D-Dienstauswahlinformationen an eine Basisstation, wobei die D2D-Dienstauswahlinformationen verwendet werden, um die Basisstation anzuweisen, eine Ressourcen-Einplanungsverarbeitung oder eine Übergabeverarbeitung an dem D2D-Endgerät gemäß den D2D-Dienstauswahlinformationen auszuführen;
wobei die D2D-Dienstauswahlinformationen Folgendes umfassen:
eine D2D-Frequenz, die für das D2D-Endgerät interessant ist, wobei die für das D2D-Endgerät interessante D2D-Frequenz Informationen einer Frequenz umfasst, mit der das D2D-Endgerät einen D2D-Dienst senden oder empfangen möchte, die für das D2D-Endgerät interessante D2D-Frequenz für die Basisstation verwendet wird, um eine Nachbarzelle auszuwählen, welche die für das D2D-Endgerät interessante D2D-Frequenz für die Übergabe unterstützt, und für eine Konfiguration verwendet wird, die durch die Basisstation zum diskontinuierlichen Überwachen oder Senden einer D2D-Frequenz in einem Nicht-Übergabeszenario zugeteilt wird.

2. Verfahren nach Anspruch 1, wobei eine Angabe, dass das D2D-Endgerät einen D2D-Dienst überwacht, mindestens eine der folgenden umfasst:
eine Angabe, dass das D2D-Endgerät eine D2D-Erkennung überwacht;
eine Angabe, dass das D2D-Endgerät eine D2D-Kommunikation überwacht;
eine Angabe, dass das D2D-Endgerät die Überwachung der D2D-Erkennung abbricht;
eine Angabe, dass das D2D-Endgerät die Überwachung der D2D-Kommunikation abbricht;
eine Angabe, dass das D2D-Endgerät die D2D-Erkennung sendet;
eine Angabe, dass das D2D-Endgerät die D2D-Kommunikation sendet;
eine Angabe, dass das D2D-Endgerät das Senden der D2D-Erkennung abbricht; und
eine Angabe, dass das D2D-Endgerät das Senden der D2D-Kommunikation abbricht.

3. Verfahren nach Anspruch 1, wobei eine D2D-Frequenz, die für das D2D-Endgerät interessant ist, mindestens eine der folgenden umfasst:
Informationen einer Frequenz, die für das D2D-Endgerät interessant ist, um die D2D-Erkennung zu überwachen;
Informationen einer Frequenz, die für das D2D-Endgerät interessant ist, um die D2D-Erkennung zu senden;
Informationen einer Frequenz, die für das D2D-Endgerät interessant ist, um die D2D-Kommunikation zu überwachen; und
Informationen einer Frequenz, die für das D2D-Endgerät interessant ist, um die D2D-Kommunikation zu senden.

4. Verfahren nach einem der Ansprüche 1 bis 3, wobei, bevor das D2D-Endgerät die D2D-Dienstauswahlinformationen an eine Basisstation sendet, das Verfahren ferner Folgendes umfasst:
Bestimmen durch das D2D-Endgerät einer D2D-Frequenz, die für das D2D-Endgerät interessant ist.

5. Verfahren nach Anspruch 4, wobei das Bestimmen durch das D2D-Endgerät einer D2D-Frequenz, die für das D2D-Endgerät interessant ist, Folgendes umfasst: Bestimmen durch das D2D-Endgerät einer Frequenzgruppe, mit der das D2D-Endgerät die D2D-Erkennung oder D2D-Kommunikation empfängt oder sendet, wobei die bestimmte Frequenzgruppe eine Frequenzgruppe ist, deren gleichzeitige Verwendung zum Empfangen und/oder Senden des D2D-Dienstes von dem D2D-Endgerät unterstützt wird.

6. Verfahren zum Verarbeiten eines Vorrichtung-zu-Vorrichtung-, D2D, Dienstes auf einer Netzwerkseite, umfassend folgende Schritte:
Empfangen (S102) von D2D-Dienstauswahlinformationen eines D2D-Endgeräts; wobei die D2D-Dienstauswahlinformationen Folgendes umfassen: eine D2D-Frequenz, die für das D2D-Endgerät interessant ist, wobei die für das D2D-Endgerät interessante D2D-Frequenz Informationen einer Frequenz umfasst, mit der das D2D-Endgerät einen D2D-Dienst senden oder empfangen möchte;
Ausführen (S104) einer Ressourcen-Einplanungsverarbeitung an dem D2D-Endgerät oder einer Übergabeverarbeitung an dem D2D-Endgerät gemäß den D2D-Dienstauswahlinformationen, umfassend: Auswählen einer Nachbarzelle, welche die D2D-Frequenz unterstützt, die für das D2D-Endgerät zur Übergabe interessant ist, und Zuteilen einer Konfiguration zum diskontinuierlichen Überwachen oder Senden einer D2D-Frequenz in einem Nicht-Übergabeszenario gemäß der D2D-Frequenz, die für das D2D-Endgerät interessant ist.

7. Verfahren nach Anspruch 6, wobei das Empfangen der D2D-Dienstauswahlinformationen des D2D-Endgeräts Folgendes umfasst:
Empfangen der D2D-Dienstauswahlinformationen, die von dem D2D-Endgerät gesendet werden, in einem Nicht-Übergabeszenario; oder in einem Übergabeszenario, Empfangen von D2D-Dienstauswahlinformationen des D2D-Endgeräts, die von dem D2D-Endgerät oder von einer Ausgangsbasisstation gesendet werden.

8. Verfahren nach Anspruch 7, wobei das Ausführen einer Ressourcen-Einplanungsverarbeitung an dem D2D-Endgerät gemäß den D2D-Dienstauswahlinformationen Folgendes umfasst: Einplanen von Ressourcen, die durch diverse aktuelle Dienste des D2D-Endgeräts verwendet werden, gemäß den D2D-Dienstauswahlinformationen, wobei die diversen Dienste mindestens einen der folgenden umfassen: einen Unicast-Dienst, einen D2D-Dienst und einen Multimedia-Broadcast- und Multicast-Dienst, MBMS.

9. Verfahren nach Anspruch 8, wobei das Einplanen der Ressourcen, die von den diversen aktuellen Diensten des D2D-Endgeräts gemäß den D2D-Dienstauswahlinformationen verwendet werden, mindestens einen der folgenden Schritte umfasst:
wenn ein Unicast-Dienst in dem D2D-Endgerät vorliegt, gemäß einer Angabe, dass das D2D-Endgerät einen D2D-Dienst überwacht und/oder sendet, vermeidet die Basisstation, wenn sie eine Unicast-Ressource einplant, eine Ressource, die von dem D2D-Endgerät beim Ausführen des Überwachens und/oder Sendens einer D2D-Erkennung und/oder D2D-Kommunikation verwendet wird;
wenn ein Unicast-Dienst in dem D2D-Endgerät vorliegt, gemäß einer Angabe, dass das D2D-Endgerät das Überwachen eines D2D-Dienstes abbricht, erlaubt die Basisstation, wenn sie eine Unicast-Ressource einplant, die Verwendung einer Ressource, die von dem D2D-Endgerät beim Ausführen des Überwachens der D2D-Erkennung und/oder der D2D-Kommunikation verwendet wird;
wenn ein Unicast-Dienst in dem D2D-Endgerät vorliegt, falls eine D2D-Dienstauswahlnachricht keine ausdrückliche Angabe übermittelt, dass das D2D-Endgerät einen D2D-Dienst überwacht, bestimmt die Basisstation, dass das D2D-Endgerät eine D2D-Sende-Empfangs-Fähigkeit aufweist und einen D2D-Dienst verwenden kann, und die Basisstation, wenn sie eine Unicast-Ressource einplant, vermeidet eine Ressource, die von dem D2D-Endgerät beim Ausführen des Überwachens der D2D-Erkennung und/oder der D2D-Kommunikation verwendet wird;
wenn ein Unicast-Dienst oder ein Multimedia-Broadcast- und Multicast-Dienst, MBMS, in dem D2D-Endgerät vorliegt, falls der Unicast-Dienst, der MBMS und der D2D-Dienst nicht gleichzeitig unterstützt werden können, wenn die Basisstation Ressourcen für das D2D-Endgerät zuteilt, trifft die Basisstation gemäß einer D2D-Dienst-Priorität eine bevorzugte Auswahl, um einen Dienst mit hoher Priorität zu unterstützen, und beendet einen Dienst mit niedriger Priorität;
wenn die D2D-Dienstauswahlinformationen D2D-Frequenz-informationen umfassen, die für das D2D-Endgerät interessant sind, teilt die Basisstation dem D2D-Endgerät eine Endgerät-D2D-Lückenmusterkonfiguration zu und sendet die Endgerät-D2D-Lückenmusterinformationen an das D2D-Endgerät.

10. Verfahren nach Anspruch 7, wobei das Ausführen einer Übergabeverarbeitung an dem D2D-Endgerät gemäß den D2D-Dienstauswahlinformationen Folgendes umfasst: Auswählen einer Zielzelle für die Übergabe gemäß den D2D-Dienstauswahlinformationen und Senden der D2D-Dienstauswahlinformationen an eine Zielbasisstation, die der Zielzelle entspricht.

11. Verfahren nach Anspruch 10, wobei das Auswählen einer Zielzelle für die Übergabe gemäß den D2D-Dienstauswahlinformationen und das Senden der D2D-Dienstauswahlinformationen an eine Basisstation, die der Zielzelle entspricht, mindestens einen der folgenden Schritte umfasst:
Übermitteln in einer Übergabeanfragenachricht der D2D-Dienstauswahlinformationen, die Angabeinformationen umfassen, dass das D2D-Endgerät einen D2D-Dienst zum Senden an die Zielbasisstation überwacht und/oder sendet;
gemäß einer D2D-Frequenz, die für das D2D-Endgerät interessant ist, Auswählen einer Nachbarzelle, welche die D2D-Frequenz als die Zielzelle für die Übergabe unterstützt, und Übermitteln in der Übergabeanfragenachricht der D2D-Dienstauswahlinformationen, welche die D2D-Frequenz umfassen, die für das Endgerät zum Senden an die Zielzellenbasisstation interessant ist;
gemäß einer D2D-Dienstpriorität, bevorzugtes Auswählen einer Nachbarzelle, die einen Dienst mit hoher Priorität unterstützt, als die Zielzelle für die Übergabe, und Übermitteln in der Übergabeanfragenachricht von Prioritätsinformationen eines Endgerät-D2D-Dienstes zum Senden an eine Basisstation, die der Zielzelle entspricht;
wobei, falls bestimmt wird, dass die Zielzelle den D2D-Dienst nicht unterstützt, die D2D-Dienstauswahlinformationen nicht gesendet werden.

12. Verfahren nach einem der Ansprüche 7 bis 11, wobei das Ausführen einer Übergabeverarbeitung an dem D2D-Endgerät ferner mindestens einen der folgenden Schritte umfasst:
Speichern der D2D-Dienstauswahlinformationen durch die Zielbasisstation, die der Zielzelle entspricht;
wenn die Zielbasisstation die D2D-/Unicast-/MBMS-Dienste nicht gleichzeitig unterstützen kann, Ablehnen, gemäß der D2D-Dienstpriorität in den D2D-Dienstauswahlinformationen, einiger Dienste, die niedrige Prioritäten aufweisen, und Übermitteln der abgelehnten Dienstinformationen in einer Übergabeantwortnachricht.

13. Vorrichtung zum Senden von Vorrichtung-zu-Vorrichtung-, D2D, Dienstauswahlinformationen, umfassend:
ein Sendemodul, das eingerichtet ist, um D2D-Dienstauswahlinformationen eines D2D-Endgeräts an eine Basisstation zu senden; wobei die D2D-Dienstauswahlinformationen Folgendes umfassen:
eine D2D-Frequenz, die für das D2D-Endgerät interessant ist, wobei die für das D2D-Endgerät interessante D2D-Frequenz Informationen einer Frequenz umfasst, mit der das D2D-Endgerät einen D2D-Dienst senden oder empfangen möchte; die für das D2D-Endgerät interessante D2D-Frequenz für die Basisstation verwendet wird, um eine Nachbarzelle auszuwählen, welche die für das D2D-Endgerät interessante D2D-Frequenz für die Übergabe unterstützt, und für eine Konfiguration verwendet wird, die durch die Basisstation zum diskontinuierlichen Überwachen oder Senden einer D2D-Frequenz in einem Nicht-Übergabe Szenario zugeteilt wird.

14. Vorrichtung nach Anspruch 13, wobei die Vorrichtung ferner Folgendes umfasst:
ein Beurteilungsmodul, das eingerichtet ist, um zu beurteilen, ob eine Auslösebedingung zum Senden einer D2D-Dienstauswahlnachricht erfüllt ist, und wenn ja, um ein Bestimmungsmodul auszulösen.

15. Vorrichtung zum Verarbeiten eines Vorrichtung-zu-Vorrichtung-, D2D, Dienstes, umfassend:
ein Empfangsmodul (20), das eingerichtet ist, um D2D-Dienstauswahlinformationen eines D2D-Endgeräts zu empfangen;
wobei die D2D-Dienstauswahlinformationen Folgendes umfassen:
eine D2D-Frequenz, die für das D2D-Endgerät interessant ist; wobei die für das D2D-Endgerät interessante D2D-Frequenz Informationen einer Frequenz umfasst, mit der das D2D-Endgerät einen D2D-Dienst senden oder empfangen möchte;
ein Verarbeitungsmodul (22), das eingerichtet ist, um die Ressourcen-Einplanungsverarbeitung an dem D2D-Endgerät oder die Übergabeverarbeitung an dem D2D-Endgerät gemäß den D2D-Dienstauswahlinformationen auszuführen, umfassend: Auswählen einer Nachbarzelle, welche D2D-Frequenz unterstützt, die für das D2D-Endgerät für die Übergabe interessant ist, und Zuteilen einer Konfiguration zum diskontinuierlichen Überwachen oder Senden einer D2D-Frequenz in einem Nicht-Übergabeszenario gemäß der D2D-Frequenz, die für das D2D-Endgerät interessant ist.

16. Vorrichtung nach Anspruch 15, wobei das Empfangsmodul eingerichtet ist, um die D2D-Dienstauswahlinformationen, die von dem D2D-Endgerät gesendet werden, in einem Nicht-Übergabeszenario zu empfangen, oder um die D2D-Dienstauswahlinformationen des D2D-Endgeräts, die von dem D2D-Endgerät oder einer Ausgangsbasisstation gesendet werden, in einem Übergabeszenario zu empfangen.

17. Vorrichtung nach Anspruch 16, wobei das Verarbeitungsmodul eine Ressourcen-Einplanungsverarbeitung an dem D2D-Endgerät folgendermaßen ausführt: Einplanen von Ressourcen, die von diversen aktuellen Diensten des D2D-Endgeräts gemäß den D2D-Dienstauswahlinformationen verwendet werden, wobei die diversen Dienste mindestens einen der folgenden umfassen: einen Unicast-Dienst, einen D2D-Dienst und einen Multimedia-Broadcast- und Multicast-Dienst, MBMS.

18. Vorrichtung nach Anspruch 17, wobei das Verarbeitungsmodul Ressourcen, die von diversen aktuellen Diensten des D2D-Endgeräts verwendet werden, gemäß mindestens einem der folgenden Arbeitsgänge einplant:
wenn ein Unicast-Dienst in dem D2D-Endgerät vorliegt, gemäß einer Angabe, dass das D2D-Endgerät einen D2D-Dienst überwacht und/oder sendet, wenn es eine Unicast-Ressource einplant, Vermeiden einer Ressource, die von dem D2D-Endgerät beim Ausführen des Überwachens und/oder Sendens der D2D-Erkennung und/oder der D2D-Kommunikation verwendet wird;
wenn ein Unicast-Dienst in dem D2D-Endgerät vorliegt, gemäß einer Angabe, dass das D2D-Endgerät das Überwachen eines D2D-Dienstes abbricht, wenn es eine Unicast-Ressource einplant, Erlauben der Verwendung einer Ressource, die von dem D2D-Endgerät beim Ausführen des Überwachens der D2D-Erkennung und/oder der D2D-Kommunikation verwendet wird;
wenn ein Unicast-Dienst in dem D2D-Endgerät vorliegt, falls eine D2D-Dienstauswahlnachricht keine ausdrückliche Angabe übermittelt, dass das D2D-Endgerät einen D2D-Dienst überwacht, Bestimmen, dass das D2D-Endgerät eine D2D-Sende-Empfangs-Fähigkeit aufweist und einen D2D-Dienst verwenden kann, und Vermeiden durch die Basisstation, wenn sie eine Unicast-Ressource einplant, einer Ressource, die von dem D2D-Endgerät beim Ausführen des Überwachens der D2D-Erkennung und/oder der D2D-Kommunikation verwendet wird;
wenn ein Unicast-Dienst oder ein Multimedia-Broadcast- und Multicast-Dienst, MBMS, in dem D2D-Endgerät vorliegt, falls der Unicast-Dienst, der MBMS und der D2D-Dienst nicht gleichzeitig unterstützt werden können, wenn die Basisstation Ressourcen für das D2D-Endgerät zuteilt, Treffen gemäß einer D2D-Dienst-Priorität eine bevorzugten Auswahl, um einen Dienst mit hoher Priorität zu unterstützen, und Beenden eines Dienstes mit niedriger Priorität;
wenn die D2D-Dienstauswahlinformationen D2D-Frequenz-informationen umfassen, die für das D2D-Endgerät interessant sind, Zuteilen einer Endgerät-D2D-Lückenmusterkonfiguration für das D2D-Endgerät und Senden der Endgerät-D2D-Lückenmusterinformationen an das D2D-Endgerät.

19. Vorrichtung nach Anspruch 15, wobei das Verarbeitungsmodul eine Übergabeverarbeitung an dem D2D-Endgerät folgendermaßen ausführt: Auswählen einer Zielzelle für die Übergabe gemäß den D2D-Dienstauswahlinformationen und Senden der D2D-Dienstauswahlinformationen an eine Zielbasisstation, die der Zielzelle entspricht.

20. Vorrichtung nach Anspruch 19, wobei das Verarbeitungsmodul eine Übergabeverarbeitung an dem D2D-Endgerät gemäß mindestens einem der folgenden Arbeitsgänge ausführt:
Übermitteln in einer Übergabeanfragenachricht der D2D-Dienstauswahlinformationen, die Angabeinformationen umfassen, dass das D2D-Endgerät einen D2D-Dienst zum Senden an die Zielbasisstation überwacht und/oder sendet;
gemäß einer D2D-Frequenz, die für das D2D-Endgerät interessant ist, Auswählen einer Nachbarzelle, welche die D2D-Frequenz unterstützt, und Übermitteln in der Übergabeanfragenachricht der D2D-Dienstauswahlinformationen, welche die D2D-Frequenz umfassen, die für das Endgerät zum Senden an die Zielzellenbasisstation interessant ist;
gemäß einer D2D-Dienstpriorität, bevorzugtes Auswählen einer Zielnachbarzelle, die einen Dienst mit hoher Priorität unterstützt, und Übermitteln durch die Basisstation in der Übergabeanfragenachricht von Prioritätsinformationen eines Endgerät-D2D-Dienstes zum Senden an die Zielbasisstation;
wobei, falls bestimmt wird, dass die Zielbasisstation den D2D-Dienst nicht unterstützt, die D2D-Dienstauswahlinformationen für die Zielbasisstation nicht gesendet werden.

## Revendications

1. Procédé d'émission d'informations de sélection de service de dispositif à dispositif D2D, comprenant :
un terminal D2D émettant (402, 802) des informations de sélection de service D2D vers une station de base, dans lequel les informations de sélection de service D2D sont utilisées pour ordonner à la station de base de réaliser un traitement d'ordonnancement de ressources ou un traitement de transfert intercellulaire sur le terminal D2D en fonction des informations de sélection de service D2D ;
dans lequel les informations de sélection de service D2D comprennent :
une fréquence D2D qui présente un intérêt pour le terminal D2D, dans lequel la fréquence D2D qui présente un intérêt pour le terminal D2D comprend des informations d'une fréquence par laquelle le terminal D2D souhaite émettre ou recevoir un service D2D, la fréquence D2D qui présente un intérêt pour le terminal D2D est utilisée pour que la station de base sélectionne une cellule voisine qui prend en charge la fréquence D2D qui présente un intérêt pour le terminal D2D pour un transfert intercellulaire, et est utilisée pour une configuration qui est allouée par la station de base pour la surveillance ou l'émission discontinue d'une fréquence D2D dans un scénario sans transfert intercellulaire.

2. Procédé selon la revendication 1, dans lequel une indication que le terminal D2D surveille un service D2D comprend au moins l'une parmi ce qui suit :
une indication que le terminal D2D surveille une découverte D2D ;
une indication que le terminal D2D surveille une communication D2D ;
une indication que le terminal D2D annule la surveillance d'une découverte D2D ;
une indication que le terminal D2D annule la surveillance d'une communication D2D ;
une indication que le terminal D2D émet une découverte D2D ;
une indication que le terminal D2D émet une communication D2D ;
une indication que le terminal D2D annule l'émission d'une découverte D2D ; et
une indication que le terminal D2D annule l'émission d'une communication D2D.

3. Procédé selon la revendication 1, dans lequel une fréquence D2D qui présente un intérêt pour le terminal D2D comprend au moins l'une parmi ce qui suit :
des informations d'une fréquence qui présente un intérêt pour le terminal D2D pour la surveillance d'une découverte D2D ;
des informations d'une fréquence qui présente un intérêt pour le terminal D2D pour l'émission d'une découverte D2D ;
des informations d'une fréquence qui présente un intérêt pour le terminal D2D pour la surveillance d'une communication D2D ; et
des informations d'une fréquence qui présente un intérêt pour le terminal D2D pour l'émission d'une communication D2D.

4. Procédé selon l'une quelconque des revendications 1 à 3, dans lequel avant que le terminal D2D n'émette les informations de sélection de service D2D vers une station de base, le procédé comprend en outre : le terminal D2D déterminant une fréquence D2D qui présente un intérêt pour le terminal D2D.

5. Procédé selon la revendication 4, dans lequel le terminal D2D déterminant une fréquence D2D qui présente un intérêt pour le terminal D2D comprend : le terminal D2D déterminant un groupe de fréquences par lequel le terminal D2D reçoit ou émet une découverte D2D ou une communication D2D, dans lequel le groupe de fréquences déterminé est un groupe de fréquences dont une utilisation simultanée pour recevoir et/ou émettre le service D2D est prise en charge par le terminal D2D.

6. Procédé de traitement de service de dispositif à dispositif D2D, côté réseau, comprenant :
la réception (S102) d'informations de sélection de service D2D d'un terminal D2D ; dans lequel les informations de sélection de service D2D comprennent : une fréquence D2D qui présente un intérêt pour le terminal D2D, dans lequel la fréquence D2D qui présente un intérêt pour le terminal D2D comprend des informations d'une fréquence par laquelle le terminal D2D souhaite émettre ou recevoir un service D2D ;
la réalisation (S104) d'un traitement d'ordonnancement de ressources sur le terminal D2D ou d'un traitement de transfert intercellulaire sur le terminal D2D en fonction des informations de sélection de service D2D, qui comprend : la sélection d'une cellule voisine qui prend en charge la fréquence D2D qui présente un intérêt pour le terminal D2D pour un transfert intercellulaire, et l'allocation d'une configuration pour la surveillance ou l'émission discontinue d'une fréquence D2D dans un scénario sans transfert intercellulaire en fonction de la fréquence D2D qui présente un intérêt pour le terminal D2D.

7. Procédé selon la revendication 6, dans lequel la réception d'informations de sélection de service D2D du terminal D2D comprend : la réception des informations de sélection de service D2D émises par le terminal D2D dans un scénario sans transfert intercellulaire ; ou, dans un scénario de transfert intercellulaire, la réception d'informations de sélection de service D2D du terminal D2D émises par le terminal D2D ou par une station de base source.

8. Procédé selon la revendication 7, dans lequel la réalisation d'un traitement d'ordonnancement de ressources sur le terminal D2D en fonction des informations de sélection de service D2D comprend : l'ordonnancement de ressources qui sont utilisées par divers services actuels du terminal D2D en fonction des informations de sélection de service D2D, dans lequel les divers services comprennent au moins l'un parmi ce qui suit : un service de monodiffusion, un service D2D et un service de diffusion et de multidiffusion multimédia MBMS.

9. Procédé selon la revendication 8, dans lequel l'ordonnancement des ressources qui sont utilisées par les divers services actuels du terminal D2D en fonction des informations de sélection de service D2D comprend au moins l'un parmi ce qui suit :
lorsqu'il existe un service de monodiffusion dans le terminal D2D, en fonction d'une indication que le terminal D2D surveille et/ou émet un service D2D, la station de base, lors de l'ordonnancement d'une ressource de monodiffusion, évite une ressource utilisée par le terminal D2D dans la réalisation de la surveillance et/ou de l'émission d'une découverte D2D et/ou d'une communication D2D ;
lorsqu'il existe un service de monodiffusion dans le terminal D2D, en fonction d'une indication que le terminal D2D annule la surveillance d'un service D2D, la station de base, lors de l'ordonnancement d'une ressource de monodiffusion, permet l'utilisation d'une ressource utilisée par le terminal D2D dans la réalisation de la surveillance d'une découverte D2D et/ou d'une communication D2D ;
lorsqu'il existe un service de monodiffusion dans le terminal D2D, si un message de sélection de service D2D ne transporte pas une indication explicite que le terminal D2D surveille un service D2D, la station de base détermine que le terminal D2D possède une capacité d'émission-réception D2D et peut utiliser un service D2D, et la station de base, lors de l'ordonnancement d'une ressource de monodiffusion, évite une ressource utilisée par le terminal D2D dans la réalisation de la surveillance d'une découverte D2D et/ou d'une communication D2D ;
lorsqu'il existe un service de monodiffusion ou un service de diffusion et de multidiffusion multimédia MBMS dans le terminal D2D, si le service de monodiffusion, le MBMS et le service D2D ne peuvent pas être pris en charge simultanément lorsque la station de base alloue des ressources pour le terminal D2D, la station de base, en fonction d'une priorité de service D2D, effectue une sélection préférentielle pour prendre en charge un service de haute priorité et arrête un service de basse priorité ;
lorsque les informations de sélection de service D2D comprennent des informations de fréquence D2D qui présentent un intérêt pour le terminal D2D, la station de base alloue une configuration de motif d'interruption D2D de terminal au terminal D2D et émet les informations de motif d'interruption D2D de terminal vers le terminal D2D.

10. Procédé selon la revendication 7, dans lequel la réalisation d'un traitement de transfert intercellulaire sur le terminal D2D en fonction des informations de sélection de service D2D comprend : la sélection d'une cellule cible pour un transfert intercellulaire en fonction des informations de sélection de service D2D, et l'émission des informations de sélection de service D2D vers une station de base cible correspondant à la cellule cible.

11. Procédé selon la revendication 10, dans lequel la sélection d'une cellule cible pour un transfert intercellulaire en fonction des informations de sélection de service D2D, et l'émission des informations de sélection de service D2D vers une station de base correspondant à la cellule cible comprend au moins l'un parmi ce qui suit :
le transport, dans un message de demande de transfert intercellulaire, des informations de sélection de service D2D comprenant des informations d'indication du terminal D2D surveillant et/ou émettant un service D2D pour une émission vers la station de base cible ;
en fonction d'une fréquence D2D qui présente un intérêt pour le terminal D2D, la sélection d'une cellule voisine qui prend en charge la fréquence D2D en tant que cellule cible pour un transfert intercellulaire, et le transport, dans le message de demande de transfert, des informations de sélection de service D2D comprenant la fréquence D2D qui présente un intérêt pour le terminal pour une émission vers la station de base de cellule cible ;
en fonction d'une priorité de service D2D, la sélection préférentielle d'une cellule voisine qui prend en charge un service de haute priorité en tant que cellule cible pour un transfert intercellulaire, et le transport, dans le message de demande de transfert intercellulaire, d'informations de priorité d'un service D2D de terminal pour une émission vers une station de base correspondant à la cellule cible ;
dans lequel, s'il est déterminé que la cellule cible ne prend pas en charge le service D2D, les informations de sélection de service D2D ne sont pas émises.

12. Procédé selon l'une quelconque des revendications 7 à 11, dans lequel la réalisation d'un traitement de transfert intercellulaire sur le terminal D2D comprend en outre au moins l'un parmi ce qui suit :
le stockage des informations de sélection de service D2D par la station de base cible correspondant à la cellule cible ;
lorsque la station de base cible ne peut pas simultanément prendre en charge les services D2D/monodiffusion/MBMS, le rejet, en fonction de la priorité de service D2D dans les informations de sélection de service D2D, de certains services ayant des priorités basses, et le transport des informations de service rejeté dans un message de réponse de transfert intercellulaire.

13. Appareil d'émission d'informations de sélection de service de dispositif à dispositif D2D, comprenant :
un module d'émission conçu pour émettre des informations de sélection de service D2D d'un terminal D2D vers une station de base ; dans lequel les informations de sélection de service D2D comprennent :
une fréquence D2D qui présente un intérêt pour le terminal D2D, dans lequel la fréquence D2D qui présente un intérêt pour le terminal D2D comprend des informations d'une fréquence par laquelle le terminal D2D souhaite émettre ou recevoir un service D2D ; la fréquence D2D qui présente un intérêt pour le terminal D2D est utilisée pour que la station de base sélectionne une cellule voisine qui prend en charge la fréquence D2D qui présente un intérêt pour le terminal D2D pour un transfert intercellulaire, et est utilisée pour une configuration qui est allouée par la station de base pour la surveillance ou l'émission discontinue d'une fréquence D2D dans un scénario sans transfert intercellulaire.

14. Appareil selon la revendication 13, dans lequel l'appareil comprend en outre :
un module d'évaluation conçu pour évaluer si une condition de déclenchement pour l'émission d'un message de sélection de service D2D est satisfaite, si tel est le cas, déclencher un module de détermination.

15. Appareil de traitement de service de dispositif à dispositif D2D, comprenant :
un module de réception (20) conçu pour recevoir des informations de sélection de service D2D d'un terminal D2D ; dans lequel les informations de sélection de service D2D comprennent : une fréquence D2D qui présente un intérêt pour le terminal D2D ;
dans lequel la fréquence D2D qui présente un intérêt pour le terminal D2D comprend des informations d'une fréquence par laquelle le terminal D2D souhaite émettre ou recevoir un service D2D ;
un module de traitement (22) conçu pour réaliser un traitement d'ordonnancement de ressources sur le terminal D2D ou un traitement de transfert intercellulaire sur le terminal D2D en fonction des informations de sélection de service D2D, qui comprend : la sélection d'une cellule voisine qui prend en charge la fréquence D2D qui présente un intérêt pour le terminal D2D pour un transfert intercellulaire, et l'allocation d'une configuration pour la surveillance ou l'émission discontinue d'une fréquence D2D dans un scénario sans transfert intercellulaire en fonction de la fréquence D2D qui présente un intérêt pour le terminal D2D.

16. Appareil selon la revendication 15, dans lequel le module de réception est conçu pour recevoir les informations de sélection de service D2D émises par le terminal D2D dans un scénario sans transfert intercellulaire, ou recevoir des informations de sélection de service D2D du terminal D2D émises par le terminal D2D ou une station de base source dans un scénario de transfert intercellulaire.

17. Appareil selon la revendication 16, dans lequel le module de traitement réalise un traitement d'ordonnancement de ressources sur le terminal D2D de la manière suivante :
l'ordonnancement de ressources qui sont utilisées par divers services actuels du terminal D2D en fonction des informations de sélection de service D2D, dans lequel les divers services comprennent au moins l'un parmi ce qui suit : un service de monodiffusion, un service D2D et un service de diffusion et de multidiffusion multimédia MBMS.

18. Appareil selon la revendication 17, dans lequel le module de traitement effectue un ordonnancement sur des ressources qui sont utilisées par divers services actuels du terminal D2D en fonction d'au moins l'une des opérations suivantes :
lorsqu'il existe un service de monodiffusion dans le terminal D2D, en fonction d'une indication que le terminal D2D surveille et/ou émet un service D2D, lors de l'ordonnancement d'une ressource de monodiffusion, l'évitement d'une ressource utilisée par le terminal D2D dans la réalisation de la surveillance et/ou de l'émission d'une découverte D2D et/ou d'une communication D2D ;
lorsqu'il existe un service de monodiffusion dans le terminal D2D, en fonction d'une indication que le terminal D2D annule la surveillance d'un service D2D, lors de l'ordonnancement d'une ressource de monodiffusion, la permission de l'utilisation d'une ressource utilisée par le terminal D2D dans la réalisation de la surveillance d'une découverte D2D et/ou d'une communication D2D ;
lorsqu'il existe un service de monodiffusion dans le terminal D2D, si un message de sélection de service D2D ne transporte pas une indication explicite que le terminal D2D surveille un service D2D, la détermination que le terminal D2D possède une capacité d'émission-réception D2D et peut utiliser un service D2D, et la station de base, lors de l'ordonnancement d'une ressource de monodiffusion, évitant une ressource utilisée par le terminal D2D dans la réalisation de la surveillance d'une découverte D2D et/ou d'une communication D2D ;
lorsqu'il existe un service de monodiffusion ou un service de diffusion et de multidiffusion multimédia MBMS dans le terminal D2D, si le service de monodiffusion, le MBMS et le service D2D ne peuvent pas être pris en charge simultanément lorsque la station de base alloue des ressources pour le terminal D2D, en fonction d'une priorité de service D2D, la réalisation d'une sélection préférentielle pour prendre en charge un service de haute priorité et l'arrêt d'un service de basse priorité ;
lorsque les informations de sélection de service D2D comprennent des informations de fréquence D2D qui présentent un intérêt pour le terminal D2D, l'allocation d'une configuration de motif d'interruption D2D de terminal au terminal D2D et l'émission d'informations de motif d'interruption D2D de terminal vers le terminal D2D.

19. Appareil selon la revendication 15, dans lequel le module de traitement réalise un traitement de transfert intercellulaire sur le terminal D2D de la manière suivante : la sélection d'une cellule cible pour un transfert intercellulaire en fonction des informations de sélection de service D2D, et l'émission des informations de sélection de service D2D vers une station de base cible correspondant à la cellule cible.

20. Appareil selon la revendication 19, dans lequel le module de traitement réalise un traitement de transfert intercellulaire sur le terminal D2D en fonction d'au moins l'une des opérations suivantes :
le transport, dans un message de demande de transfert intercellulaire, des informations de sélection de service D2D comprenant des informations d'indication du terminal D2D surveillant et/ou émettant un service D2D pour une émission vers la station de base cible ;
en fonction d'une fréquence D2D qui présente un intérêt pour le terminal D2D, la sélection d'une cellule voisine qui prend en charge la fréquence D2D, et le transport, dans le message de demande de transfert, des informations de sélection de service D2D comprenant la fréquence D2D qui présente un intérêt pour le terminal pour une émission vers la station de base cible ;
en fonction d'une priorité de service D2D, la sélection préférentielle d'une cellule voisine cible qui prend en charge un service de haute priorité, et la station de base transportant, dans le message de demande de transfert intercellulaire, des informations de priorité d'un service D2D de terminal pour une émission vers la station de base cible ;
dans lequel s'il est déterminé que la station de base cible ne prend pas en charge le service D2D, les informations de sélection de service D2D pour la station de base cible ne sont pas émises.
